# EUROPEAN PATENT SPECIFICATION

(11) **EP 2 641 825 B1**
(45) Date of publication and mention of the grant of the patent: **30.03.2016**
(21) Application number: 11841763.3
(22) Date of filing: 13.01.2011
(51) Int. Cl.: B63B 35/00, B66C 5/02, F03D 9/00

(54) **SHIP FOR INSTALLING OFFSHORE WIND TURBINES, AND METHOD FOR INSTALLING OFFSHORE WIND TURBINES USING SAME**
SCHIFF ZUR INSTALLATION VON OFFSHORE-WINDKRAFTANLAGEN UND VERFAHREN ZUR INSTALLATION VON OFFSHORE-WINDKRAFTANLAGEN DAMIT
NAVIRE PERMETTANT L'INSTALLATION D'ÉOLIENNES EN MER, ET PROCÉDÉ PERMETTANT D'INSTALLER DES ÉOLIENNES EN MER À L'AIDE DE CELUI-CI

(30) Priority: 18.11.2010 JP 2010257884
(43) Date of publication of application: 25.09.2013
(73) Proprietor: Mitsubishi Heavy Industries, Ltd., Tokyo 108-8215 (JP)
(72) Inventor: SAWAI, Takayuki, Tokyo 108-8215 (JP); KUMAMOTO, Hitoshi, Tokyo 108-8215 (JP); WATANABE, Tomonori, Tokyo 108-8215 (JP); FUJITA, Shigetomo, Tokyo 108-8215 (JP); TSUKAMOTO, Izumi, Tokyo 108-8215 (JP)
(74) Representative: Henkel, Breuer & Partner
(86) International application number: PCT/JP2011/050389
(87) International publication number: WO 2012/066789

(56) References cited:
- WO-A1-2009/068038
- WO-A1-2010/062188
- WO-A1-2011/031148
- WO-A2-2009/080035
- JP-A- 4 012 990
- JP-A- 11 034 970
- JP-A- 2003 341 586
- JP-A- 2005 154 075
- JP-A- 2005 187 155
- JP-A- 2009 013 829
- JP-U- H0 437 188
- NL-C1- 1 023 142
- US-A1- 2009 217 852

## Description

### {Technical Field}

The present invention relates to offshore wind-turbine installation ships and offshore wind-turbine installation methods using the same.

### {Background Art}

Offshore wind turbines are being actively built today in Europe, and their numbers are expected to increase in future. Therefore, it is expected that the number of offshore construction sites will significantly increase. In addition, with regard to wind-turbine installation sea areas, there are plans for installing wind turbines in deep sea areas that are more distant from the shores, and the wind turbines used are also becoming larger.

An offshore wind-turbine installation process involves the use of a self-elevating platform equipped with a jack-up device and a deck crane. Wind-turbine components, such as segmented or partly-joined wind turbine blades, nacelles containing generators and gear boxes, and towers, and foundation structures to be built on the seafloor on which the wind turbines will be installed offshore are loaded onto the self-elevating platform. Then, the self-elevating platform is self-propelled or towed to a wind-turbine installation sea area. Subsequently, once the hull is completely lifted above the sea surface by lowering a jack-up leg of the jack-up device to the seafloor, the deck crane on the platform is used to perform the wind-turbine installation process.

Most existing wind-turbine installation ships can carry wind-turbine components and foundation structures for two to three wind turbines at a time. After being loaded with the wind-turbine components and the foundation structures at a loading port, the ship travels to an installation sea area where the loaded number of wind turbines and foundation structures are installed, and the ship then returns to the loading port. This process of transporting and installing wind turbines is repeated.

There is also a case where one self-elevating platform serving as a dedicated platform for wind-turbine installation is stationed in a wind-turbine installation sea area and another self-elevating platform is used for transporting the components. Specifically, a plurality of wind-turbine components and foundation structures are loaded onto the component-transporting platform at the loading port, and the component-transporting platform is stopped next to the stationed wind-turbine-installation-dedicated platform. After jacking up the component-transporting platform, the wind-turbine components and the foundation structures loaded on the component-transporting platform are hoisted by using the deck crane on the installation-dedicated platform, thereby performing the installation process.

However, with the current construction method described above, it is expected that an enormous cost is required for the offshore construction in view of the construction time and the costs required for the platforms. Therefore, there are big challenges to achieve cost reduction and to make improvements.

Problems concerning the construction time include a longer sailing time from the loading port to wind-turbine installation sea areas due to the installation sea areas being farther from shore relative to the current installation areas, a longer time required for the jack-up device to elevate and lower the platform due to the water in the installation sea areas being deeper than that in the current installation areas, and a lower time-efficiency caused by a reduced number of wind turbines that can be transported at a time with the currently-used equipment due to the increased size of the wind turbines.

Problems concerning the costs required for the platforms include an increase in the demand for platforms due to an increasing number of construction sites, and an increase in the price of platforms, which is caused by an increase in the size of platforms and an increase in the capacity of jack-up devices and deck cranes in accordance with the increased size of the wind turbines.

Japanese Unexamined Patent Application, Publication No. 2005-69025 discloses an offshore wind-turbine installation method in which a foundation for a wind turbine is a floating body. In this method, the floating body is towed to an installation sea area where the floating body is sunk into the sea so as to be set on the seafloor. Because the wind turbine in its assembled state is transported to and installed in the installation sea area in this manner, this method is advantageous in that there is no need to perform an assembly process at the installation site.

The documents NL 1023142, US 2009/0217852 and WO 2011/031148 show other offshore installation systems.

### {Summary of Invention}

### {Technical Problem}

However, JP-A-2005-69025 involves a difficult process for installing the wind turbine since the floating body needs to be sunk into the sea while maintaining the orientation of the wind turbine by supporting it with a crane ship. Moreover, since it is necessary to prepare a crane ship in addition to a tugboat, it is difficult to achieve cost reduction.

Furthermore, when performing a so-called integral wind-turbine installation process in which a preassembled wind turbine is transported to and installed in an installation sea area by using a ship, it is conceivable that a crane is used to hoist the entire wind turbine from above and to convey the wind turbine. However, using such a crane involves some risk since the crane hoisting the wind turbine may swing during strong winds, forcing the process to be halted, which is a problem in terms of a longer working period and an increase in costs.

The present invention has been made in view of such circumstances and an object thereof is to provide an offshore wind-turbine installation ship and an offshore wind-turbine installation method using the same that allow for installation of a wind turbine by a simple process in a case where a wind turbine in its assembled state is to be transported to and installed in an installation sea area.

### {Solution to Problem}

In order to solve the aforementioned problems, an offshore wind-turbine installation ship and an offshore wind-turbine installation method using the same according to the present invention employ the following solutions.

Specifically, a first aspect of the present invention provides an offshore wind-turbine installation ship on which a plurality of wind turbines, each of which is preassembled by combining a tower, a nacelle, and wind turbine blades, are loaded and arranged in a front-rear direction of a hull and that is self-propelled or towed to a wind-turbine installation sea area where the ship installs each wind turbine onto a preinstalled foundation. The offshore wind-turbine installation ship includes a handling device that moves in the front-rear direction of the hull and grips and lifts the tower of the wind turbine. When installing the wind turbine onto the foundation, the handling device grips and lifts the tower of the wind turbine and moves to a position above the foundation located behind the hull so as to install the wind turbine onto the foundation.

The offshore wind-turbine installation ship according to the first aspect of the present-invention performs a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the handling device that moves in the front-rear direction of the hull and grips and lifts the tower of the wind turbine is provided. Therefore, the wind turbine can be stably conveyed by gripping the tower of the wind turbine when installing the wind turbine onto the foundation. The handling device moves to the position above the foundation located behind the hull and installs the wind turbine onto the foundation. Accordingly, with the present invention, when installing the wind turbine onto the foundation, the wind turbine is stably gripped and conveyed so that the process can be prevented from being interrupted due to strong winds, thereby shortening the installation process of the wind turbine.

It is preferable that the offshore wind-turbine installation ship according to the first aspect of the present invention further include a wind-turbine support structure that stands upright on a deck and extends in the front-rear direction of the hull, the wind-turbine support structure supporting the wind turbines loaded on the deck. Moreover, the handling device preferably moves on a rail provided at a predetermined height position of the wind-turbine support structure.

Each of the wind turbines loaded on the deck is supported by the wind-turbine support structure that stands upright on the deck and extends in the front-rear direction of the hull. Moreover, the rail on which the handling device moves is provided at the predetermined height position of the wind-turbine support structure. Consequently, the handling device grips the tower of the wind turbine at the predetermined height position thereof, meaning that the tower can be gripped at a position located near the center of gravity of the wind turbine, whereby the wind turbine can be stably conveyed.

In the aforementioned offshore wind-turbine installation ship, the wind-turbine support structure is preferably provided with a rail extension section extending from the rail to the position above the foundation located behind the hull, and the rail extension section is preferably retractable toward the hull.

The wind-turbine support structure is provided with the rail extension section extending from the rail to the position above the foundation located behind the hull. Consequently, the handling device can be guided to the position above the foundation by being made to move on the rail extension section.

Furthermore, since the rail extension section is retractable toward the hull, the rail extension section can be prevented from hindering the process when positioning the ship by moving it closer toward the foundation. In addition, when the ship floats and rocks on the water as a result of raising a jack-up leg after installing the wind turbine on the foundation, the rail extension section can be prevented from coming into contact with the wind-turbine tower.

Furthermore, it is preferable that the offshore wind-turbine installation ship according to the first aspect of the present invention further include a wind-turbine support structure that stands upright on a deck and extends in the front-rear direction of the hull, the wind-turbine support structure supporting the wind turbines loaded on the deck; and a support device that supports the tower of the wind turbine while moving on a structure rail that is provided at a predetermined height position of the wind-turbine support structure and extends in the front-rear direction of the hull. Moreover, the handling device preferably moves on a deck rail provided on the deck. When conveying the wind turbine, the handling device preferably lifts the tower from a lower part thereof, and the support device preferably supports the tower at a predetermined height position thereof.

Each of the wind turbines loaded on the deck is supported by the wind-turbine support structure that stands upright on the deck and extends in the front-rear direction of the hull. Moreover, the rail is provided at the predetermined height position of the wind-turbine support structure, and the support device that supports the tower of the wind turbine moves on this rail. Moreover, the handling device moves on the rail provided on the deck.

When conveying the wind turbine, the handling device lifts the tower from the lower part thereof, and the support device supports the tower at the predetermined height position thereof. Accordingly, the tower is conveyed while being supported at two positions, i.e., the lower part and the predetermined height position thereof, whereby the wind turbine can be stably conveyed.

The support device does not need to have a function for lifting the wind turbine so long as the support device can support the tower to prevent it from falling.

In the aforementioned offshore wind-turbine installation ship, the wind-turbine support structure is preferably provided with a structure-rail extension section extending from the structure rail to the position above the foundation located behind the hull. The deck preferably includes a deck extension section that extends to the position above the foundation located behind the hull. The deck extension section is preferably provided with a deck-rail extension section extending from the deck rail toward a stern. The structure-rail extension section, the deck extension section, and the deck-rail extension section are preferably retractable toward the hull.

The wind-turbine support structure is provided with the structure-rail extension section extending from the structure rail to the position above the foundation located behind the hull. Consequently, the support device can be guided to the position above the foundation by being made to move on the structure-rail extension section. In addition, when the ship floats and rocks on the water as a result of raising a jack-up leg after installing the wind turbine on the foundation, the deck extension section and the rail extension section can be prevented from coming into contact with the wind-turbine tower and the foundation.

Furthermore, the deck is provided with the deck extension section that extends to the position above the foundation located behind the hull, and this deck extension section is provided with the deck-rail extension section. Consequently, the handling device can be guided to the position above the foundation by being made to move on the deck-rail extension section.

Furthermore, since the structure-rail extension section, the deck extension section, and the deck-rail extension section are retractable toward the hull, these extension sections can be prevented from hindering the process when positioning the ship by moving it closer toward the foundation.

Furthermore, in the offshore wind-turbine installation ship according to the first aspect of the present invention, the handling device is preferably movable in a beam direction extending orthogonally to the front-rear direction of the hull.

Because the handling device is movable in the beam direction, the wind turbine can be accurately set in position when being installed onto the foundation.

Furthermore, in the aforementioned offshore wind-turbine installation ship, the support device preferably moves by following the position of the handling device.

Because the support device moves by following the position of the handling device, the wind turbine can be conveyed while maintaining the tower in a substantially vertical orientation.

Furthermore, when the handling device moves in the beam direction, the support device also moves correspondingly in the beam direction.

A second aspect of the present invention provides an offshore wind-turbine installation ship on which a plurality of wind turbines, each of which is preassembled by combining a tower, a nacelle, and wind turbine blades, are loaded and arranged in a front-rear direction of a hull and that is self-propelled or towed to a wind-turbine installation sea area where the ship installs each wind turbine onto a preinstalled foundation. The offshore wind-turbine installation ship includes a rail that is provided on a deck and extends in the front-rear direction of the hull; a carriage that moves on the rail in a state where the wind turbine is placed on the carriage; a rail extension section that extends to a position above the foundation located behind the hull and is connectable to the rail; beam-direction moving means that makes the rail extension section movable in a beam direction extending orthogonally to the front-rear direction of the hull; and vertical-direction moving means that moves in the vertical direction so as to move the rail extension section and the beam-direction moving means toward the foundation in the state where the wind turbine is placed on the carriage and to install the wind turbine onto the foundation. The rail extension section, the beam-direction moving means, and the vertical-direction moving means are retractable toward the hull.

The offshore wind-turbine installation ship according to the second aspect of the present invention performs a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the carriage that moves on the rail in a state where the wind turbine is placed on the carriage is used to convey the wind turbine, so that the wind turbine can be stably conveyed. In order to convey the wind turbine more stably, a support device that supports the tower at a predetermined height position thereof so as to prevent it from falling is preferably provided.

By providing the rail extension section that extends to the position above the foundation located behind the hull and is connectable to the rail, the carriage can be guided to the position above the foundation. Moreover, since the beam-direction moving means that makes the rail extension section movable in the beam direction is provided, the positioning of the wind turbine relative to the foundation can be accurately performed.

When installing the wind turbine onto the foundation, the vertical-direction moving means moves in the vertical direction so as to move the rail extension section and the beam-direction moving means toward the foundation in the state where the wind turbine is placed on the carriage and to install the wind turbine onto the foundation.

Moreover, because the rail extension section, the beam-direction moving means, and the vertical-direction moving means are retractable toward the hull, they can be prevented from hindering the process when positioning the ship by moving it closer toward the foundation.

Furthermore, since the wind turbine can be conveyed without having to employ a configuration that grips and lifts the tower of the wind turbine, the tower is prevented from receiving an excessive force.

A third aspect of the present invention provides an offshore wind-turbine installation ship on which a plurality of wind turbines, each of which is preassembled by combining a tower, a nacelle, and wind turbine blades, are loaded and arranged in a front-rear direction of a hull and that is self-propelled or towed to a wind-turbine installation sea area where the ship installs each wind turbine onto a preinstalled foundation. The offshore wind-turbine installation ship includes a connection bridge that connects the foundation located behind the hull and a deck on the hull; and a pushing device that pushes a lower part of the wind turbine loaded on the deck toward the foundation. The wind turbine is pushed outward by the pushing device so as to be conveyed onto the foundation while sliding on the connection bridge.

The offshore wind-turbine installation ship according to the third aspect of the present invention performs a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the foundation and the deck are connected by the connection bridge, and the wind turbine is conveyed by sliding on the connection bridge by the pushing device that pushes the lower part of the wind turbine toward the foundation, whereby the wind turbine can be stably conveyed. In order to convey the wind turbine more stably, a support device that supports the tower at a predetermined height position thereof so as to prevent it from falling is preferably provided.

The connection bridge is preferably retractable toward the hull. Thus, the connection bridge can be prevented from hindering the process when positioning the ship by moving it closer toward the foundation. In addition, when the ship floats and rocks on the water as a result of raising a jack-up leg after installing the wind turbine on the foundation, a deck extension section and a rail extension section can be prevented from coming into contact with the wind-turbine tower and the foundation.

In the offshore wind-turbine installation ship according to the third aspect of the present invention, a lower end of the tower of the wind turbine is preferably provided with an engagement section having a shape that is engageable with a recess formed in the foundation.

The lower end of the tower of the wind turbine is provided with the engagement section having a shape that is engageable with the recess formed in the foundation. Consequently, when connecting the wind turbine to the foundation by sliding the wind turbine thereto by using the pushing device, the engagement section at the lower end of the tower is brought into engagement with the recess formed in the foundation so that the wind turbine and the foundation can be connected to each other, thereby simplifying the process.

A fourth aspect of the present invention provides an offshore wind-turbine installation ship on which a plurality of wind turbines, each of which is preassembled by combining a tower, a nacelle, and wind turbine blades', are loaded and arranged in a front-rear direction of a hull and that is self-propelled or towed to a wind-turbine installation sea area where the ship installs each wind turbine onto a preinstalled foundation. The offshore wind-turbine installation ship includes a gantry crane that moves in the front-rear direction of the hull and hoists the wind turbine. When installing the wind turbine onto the foundation, the gantry crane supports the wind turbine in a state where a horizontally-extending girder and the tower of the wind turbine extend crosswise to each other and moves to a position above the foundation located behind the hull while hoisting the wind turbine from a lower end thereof so as to install the wind turbine onto the foundation.

The offshore wind-turbine installation ship according to the fourth aspect of the present invention performs a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the gantry crane that hoists the wind turbine from the lower end thereof is used. In addition, the gantry crane supports the tower in a state where the horizontally-extending girder and the tower extend crosswise to each other so that the wind turbine is lifted while the tower is supported at two positions, i.e., the lower end and a predetermined height position thereof, whereby the wind turbine can be stably conveyed. Accordingly, with the present invention, when installing the wind turbine onto the foundation, the wind turbine can be stably supported and conveyed so that the process can be prevented from being interrupted due to strong winds, thereby shortening the installation process of the wind turbine.

It is preferable that the offshore wind-turbine installation ship according to the fourth aspect of the present invention further include a deck extension section that extends to the position above the foundation located behind the hull. Moreover, it is preferable that the gantry crane move on the deck extension section and be guided to the position above the foundation, and the deck extension section is preferably retractable toward the hull.

The deck extension section that extends to the position above the foundation located behind the hull is provided such that the gantry crane is guided to the position above the foundation by being made to move on this deck extension section. Because the deck extension section is retractable toward the hull, the deck extension section can be prevented from hindering the process when positioning the ship by moving it closer toward the foundation. In addition, when the ship floats and rocks on the water as a result of raising a jack-up leg after installing the wind turbine on the foundation, the deck extension section can be prevented from coming into contact with the wind-turbine tower and the foundation.

A fifth aspect of the present invention provides an offshore wind-turbine installation method using an offshore wind-turbine installation ship on which a plurality of wind turbines, each of which is preassembled by combining a tower, a nacelle, and wind turbine blades, are loaded and arranged in a front-rear direction of a hull and that is self-propelled or towed to a wind-turbine installation sea area where the ship installs each wind turbine onto a preinstalled foundation. The offshore wind-turbine installation ship includes a handling device that moves in the front-rear direction of the hull and grips and lifts the tower of the wind turbine. When installing the wind turbine onto the foundation, the handling device grips and lifts the tower of the wind turbine and moves to a position above the foundation located behind the hull so as to install the wind turbine onto the foundation.

The offshore wind-turbine installation method according to the fifth aspect of the present invention involves performing a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the handling device that moves in the front-rear direction of the hull and grips and lifts the tower of the wind turbine is provided. Therefore, the wind turbine can be stably conveyed by gripping the tower of the wind turbine when installing the wind turbine onto the foundation. The handling device moves to the position above the foundation located behind the hull and installs the wind turbine onto the foundation. Accordingly, with the present invention, when installing the wind turbine onto the foundation, the wind turbine is stably gripped and conveyed so that the process can be prevented from being interrupted due to strong winds, thereby shortening the installation process of the wind turbine.

A sixth aspect of the present invention provides an offshore wind-turbine installation method using an offshore wind-turbine installation ship on which a plurality of wind turbines, each of which is preassembled by combining a tower, a nacelle, and wind turbine blades, are loaded and arranged in a front-rear direction of a hull and that is self-propelled or towed to a wind-turbine installation sea area where the ship installs each wind turbine onto a preinstalled foundation. The offshore wind-turbine installation ship includes a rail that is provided on a deck and extends in the front-rear direction of the hull; a carriage that moves on the rail in a state where the wind turbine is placed on the carriage; a rail extension section that extends to a position above the foundation located behind the hull and is connectable to the rail; beam-direction moving means that makes the rail extension section movable in a beam direction extending orthogonally to the front-rear direction of the hull; and vertical-direction moving means that moves in the vertical direction so as to move the rail extension section and the beam-direction moving means toward the foundation in the state where the wind turbine is placed on the carriage and to install the wind turbine onto the foundation. The rail extension section, the beam-direction moving means, and the vertical-direction moving means are retractable toward the hull.

The offshore wind-turbine installation method according to the sixth aspect of the present invention involves performing a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the carriage that moves on the rail in a state where the wind turbine is placed on the carriage is used to convey the wind turbine, so that the wind turbine can be stably conveyed. In order to convey the wind turbine more stably, a support device that supports the tower at a predetermined height position thereof so as to prevent it from falling is preferably provided.

By providing the rail extension section that extends to the position above the foundation located behind the hull and is connectable to the rail, the carriage can be guided to the position above the foundation. Moreover, since the beam-direction moving means that makes the rail extension section movable in the beam direction is provided, the positioning of the wind turbine relative to the foundation can be accurately performed.

When installing the wind turbine onto the foundation, the vertical-direction moving means moves in the vertical direction so as to move the rail extension section and the beam-direction moving means toward the foundation in the state where the wind turbine is placed on the carriage and to install the wind turbine onto the foundation.

Moreover, because the rail extension section, the beam-direction moving means, and the vertical-direction moving means are retractable toward the hull, they can be prevented from hindering the process when positioning the ship by moving it closer toward the foundation. In addition, when the ship floats and rocks on the water as a result of raising a jack-up leg after installing the wind turbine on the foundation, the rail extension section can be prevented from coming into contact with the wind turbine and the foundation.

Furthermore, since the wind turbine can be conveyed without having to employ a configuration that grips and lifts the tower of the wind turbine, the tower is prevented from receiving an excessive force.

A seventh aspect of the present invention provides an offshore wind-turbine installation method using an offshore wind-turbine installation ship on which a plurality of wind turbines, each of which is preassembled by combining a tower, a nacelle, and wind turbine blades, are loaded and arranged in a front-rear direction of a hull and that is self-propelled or towed to a wind-turbine installation sea area where the ship installs each wind turbine onto a preinstalled foundation. The offshore wind-turbine installation ship includes a connection bridge that connects the foundation located behind the hull and a deck on the hull; and a pushing device that pushes a lower part of the wind turbine loaded on the deck toward the foundation. The wind turbine is pushed outward by the pushing device so as to be conveyed onto the foundation while sliding on the connection bridge.

The offshore wind-turbine installation method according to the seventh aspect of the present invention involves performing a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the foundation and the deck are connected by the connection bridge, and the wind turbine is conveyed by being slid on the connection bridge by the pushing device that pushes the lower part of the wind turbine toward the foundation, whereby the wind turbine can be stably conveyed. In order to convey the wind turbine more stably, a support device that supports the tower at a predetermined height position thereof so as to prevent it from falling is preferably provided.

The connection bridge is preferably retractable toward the hull. Thus, the connection bridge can be prevented from hindering the process when positioning the ship by moving it closer toward the foundation.

An eighth aspect of the present invention provides an offshore wind-turbine installation method using an offshore wind-turbine installation ship on which a plurality of wind turbines, each of which is preassembled by combining a tower, a nacelle, and wind turbine blades, are loaded and arranged in a front-rear direction of a hull and that is self-propelled or towed to a wind-turbine installation sea area where the ship installs each wind turbine onto a preinstalled foundation. The offshore wind-turbine installation ship includes a gantry crane that moves in the front-rear direction of the hull and hoists the wind turbine. When installing the wind turbine onto the foundation, the gantry crane supports the wind turbine in a state where a horizontally-extending girder and the tower of the wind turbine extend crosswise to each other and moves to a position above the foundation located behind the hull while hoisting the wind turbine from a lower end thereof so as to install the wind turbine onto the foundation.

The offshore wind-turbine installation method according to the eighth aspect of the present invention involves performing a so-called integral wind-turbine installation process in which wind turbines, each of which is preassembled by combining a tower, a nacelle, and wind turbine blades, in their preassembled state are transported to and installed in a wind-turbine installation sea area. Therefore, the need for assembling the wind turbines in the installation area can be eliminated.

Using a crane that hoists a wind turbine from above, as in the related art, involves some risk since the wind turbine may swing during strong winds, forcing the process to be halted. In contrast, in the present invention, the gantry crane that hoists the wind turbine from the lower end thereof is used. In addition, the gantry crane supports the tower in a state where the horizontally-extending girder and the tower extend crosswise to each other so that the wind turbine is lifted while the tower is supported at two positions, i.e., the lower end and a predetermined height position thereof, whereby the wind turbine can be stably conveyed. Accordingly, with the present invention, when installing the wind turbine onto the foundation, the wind turbine can be stably supported and conveyed so that the process can be prevented from being interrupted due to strong winds, thereby shortening the installation process of the wind turbine.

### {Advantageous Effects of Invention}

According to the present invention, since a wind turbine can be stably conveyed when installing the wind turbine onto a foundation, the process can be prevented from being interrupted due to strong winds, thereby shortening the installation process of the wind turbine.

### {Brief Description of Drawings}

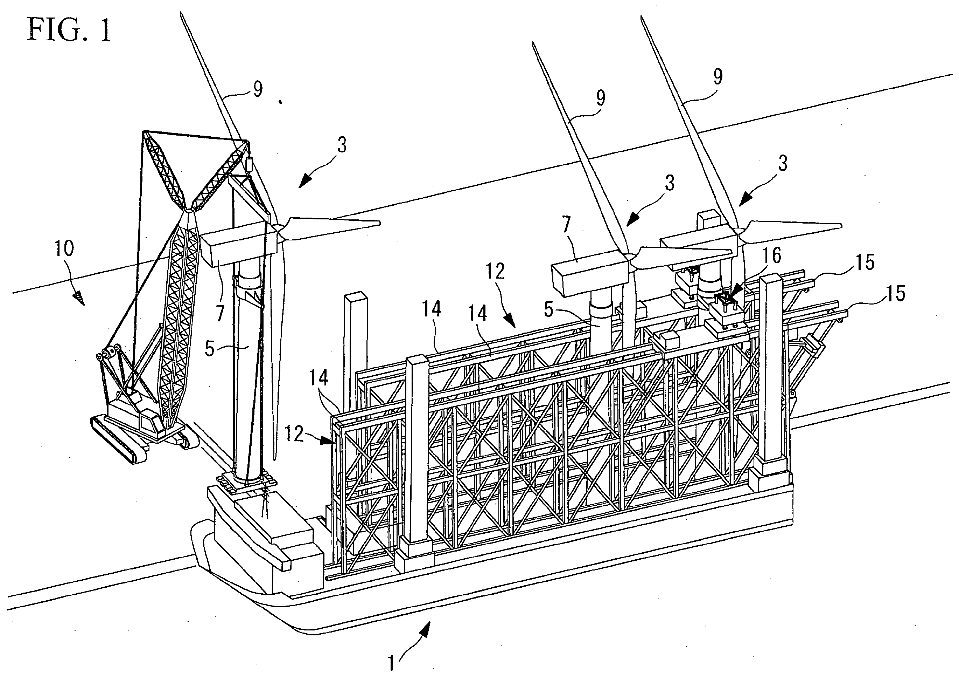

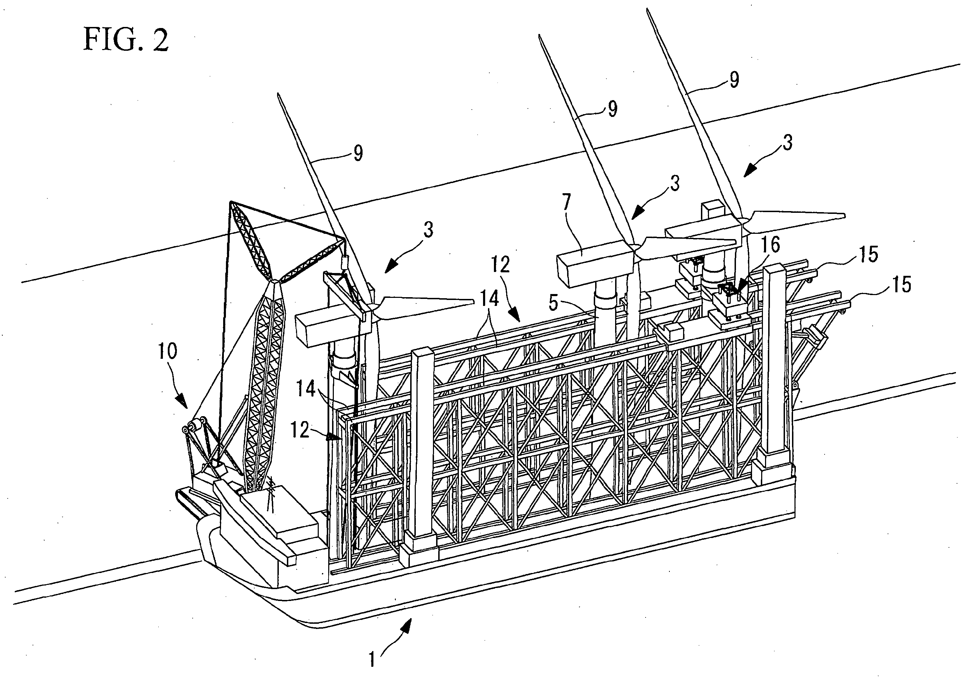

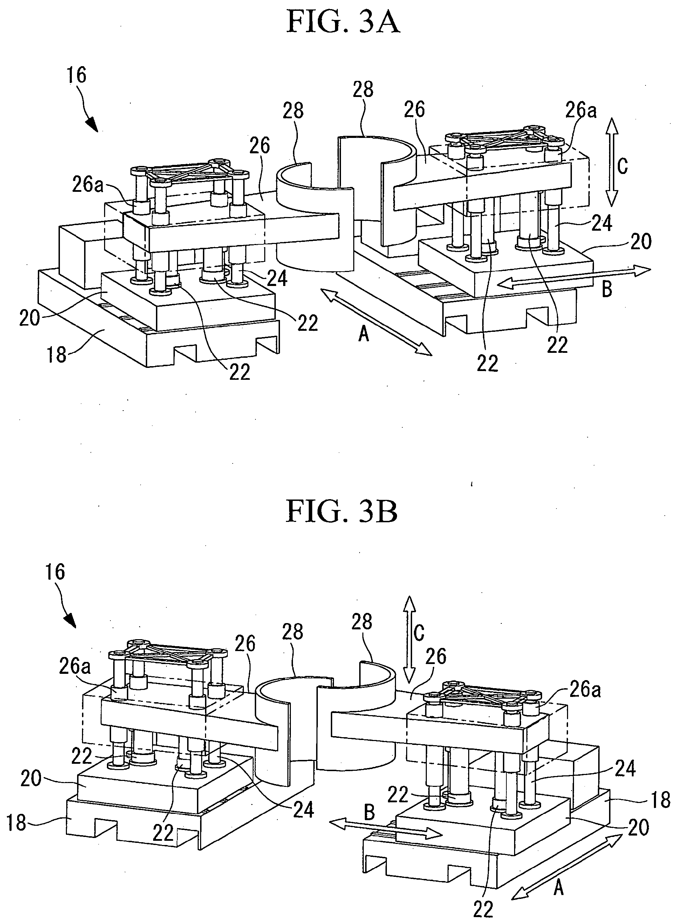

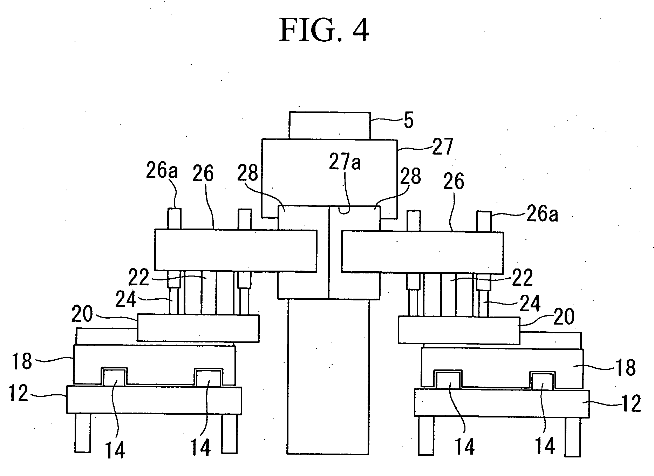

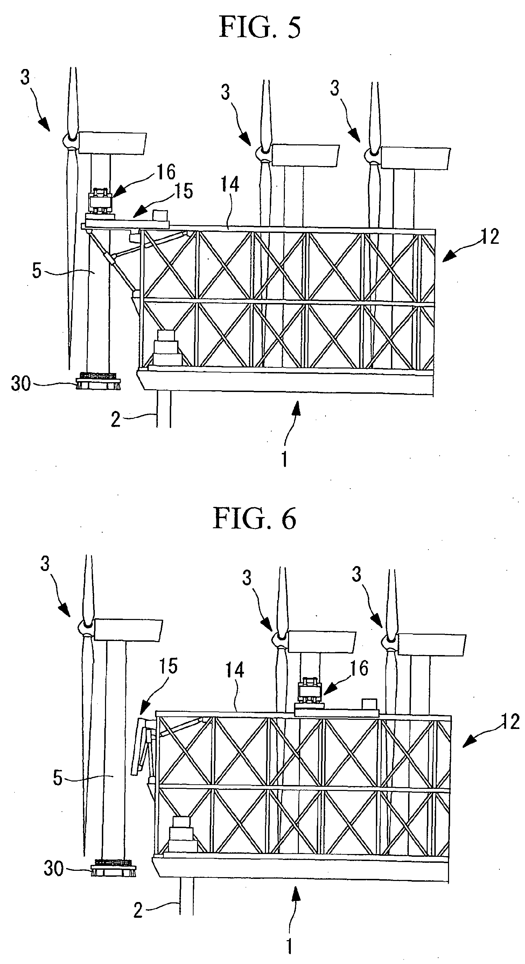

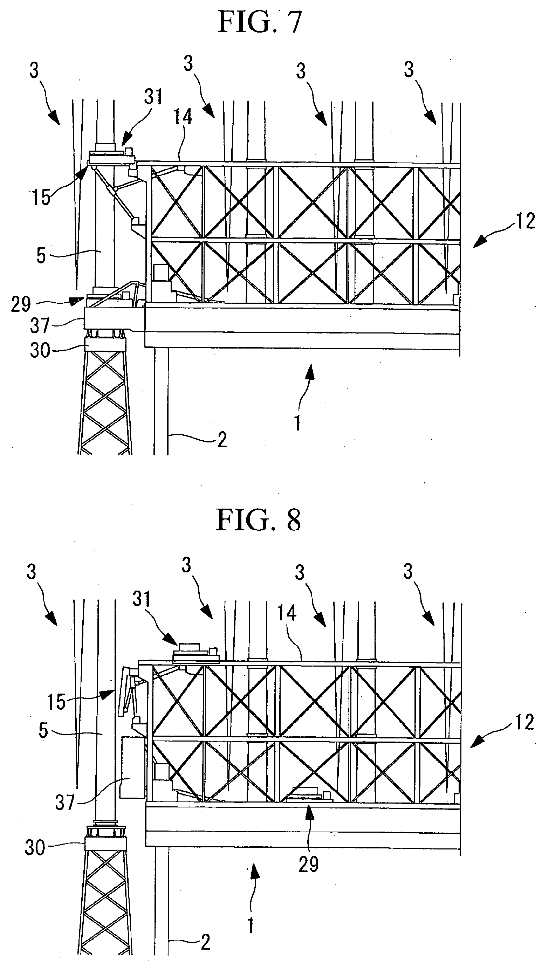

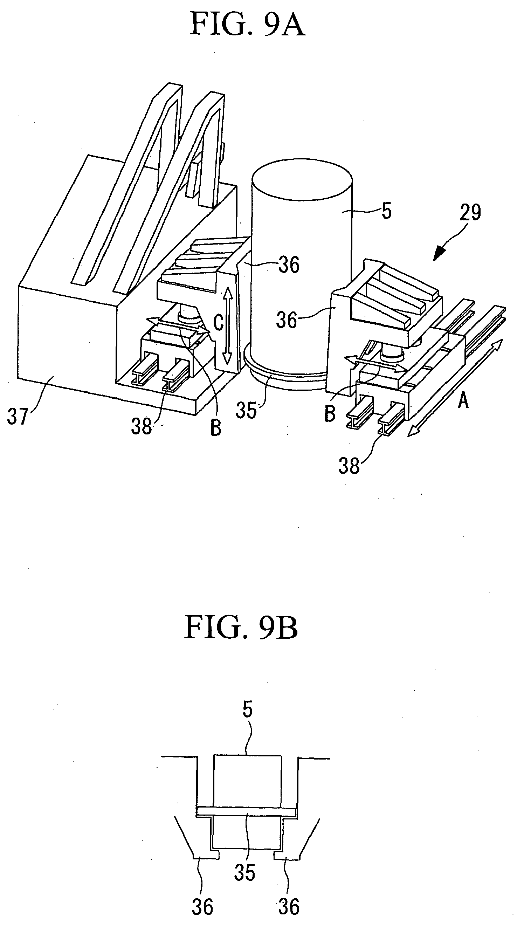

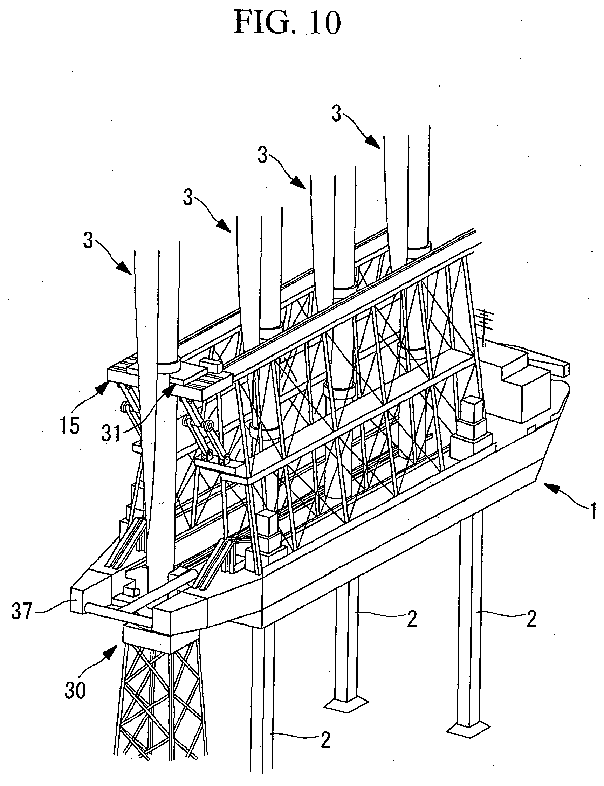

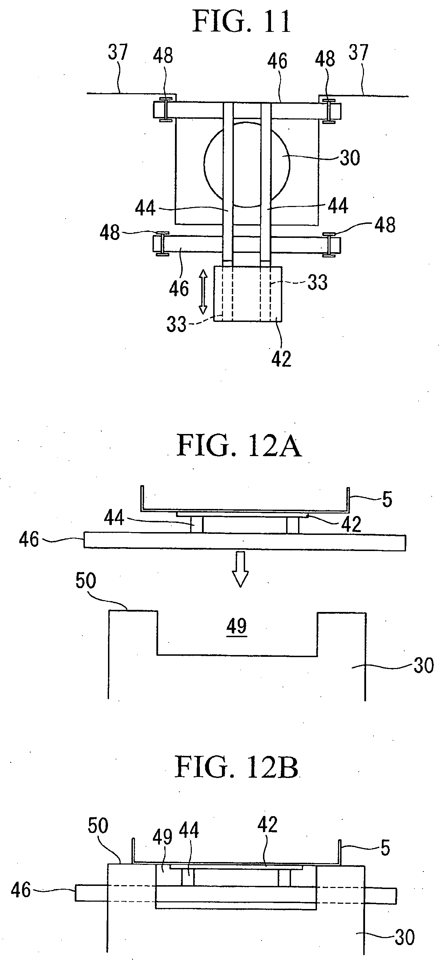

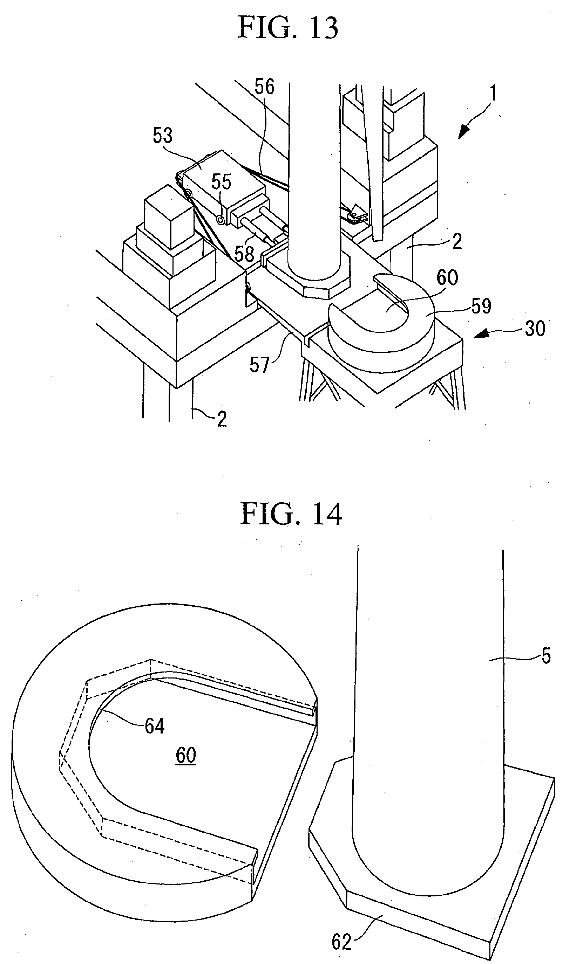

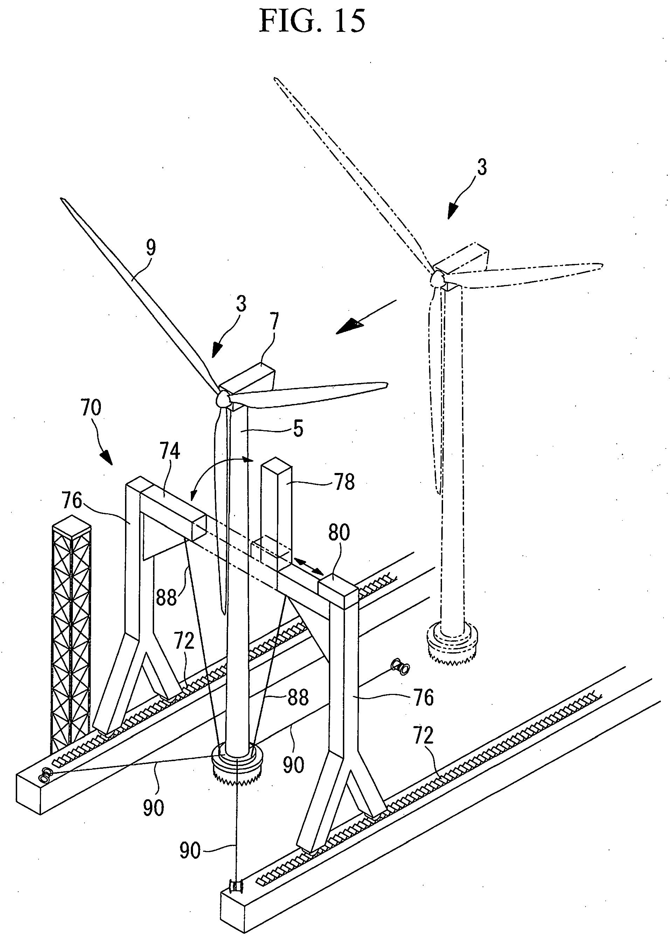

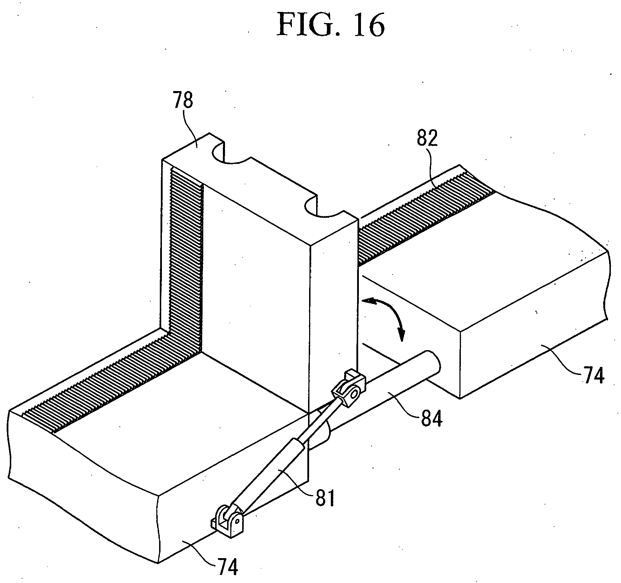

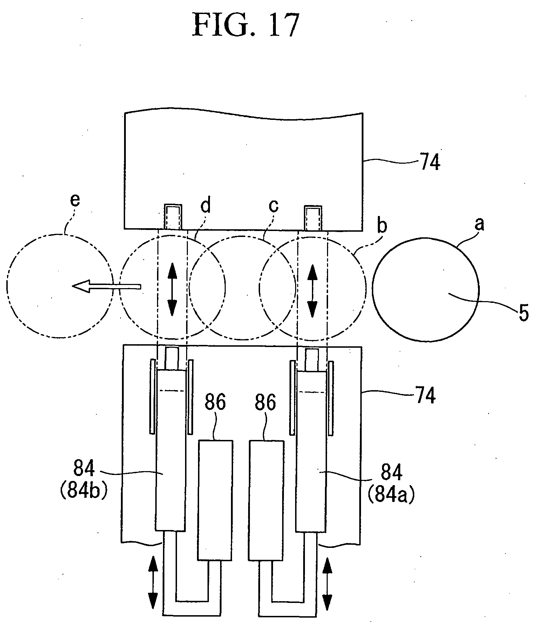

{Fig. 1} Fig. 1 is a perspective view illustrating an offshore wind-turbine installation ship according to a first embodiment of the present invention, showing a state where a wind turbine is being hoisted at an onshore dock.
{Fig. 2} Fig. 2 is a perspective view illustrating a state where the wind turbine shown in Fig. 1 is loaded onto the deck of the offshore wind-turbine installation ship.
{Fig. 3A} Fig. 3A is a perspective view illustrating a handling device in Fig. 1.
{Fig. 3B} Fig. 3B is a perspective view illustrating the handling device in Fig. 1 from an angle different from that in Fig. 3A.
{Fig. 4} Fig. 4 is a front view illustrating a state where a tower is gripped by the handling device in Figs. 3A and 3B.
{Fig. 5} Fig. 5 is a side view illustrating a wind-turbine installation process performed by using the offshore wind-turbine installation ship in Fig. 1.
{Fig. 6} Fig. 6 is a side view illustrating a state where rail extension sections are folded away after the wind turbine is installed.
{Fig. 7} Fig. 7 is a side view of a relevant portion of an offshore wind-turbine installation ship according to a second embodiment of the present invention, showing a wind-turbine installation process.
{Fig. 8} Fig. 8 is a side view illustrating a state where rail extension sections and a deck extension section are folded away after the wind turbine is installed.
{Fig. 9A} Fig. 9A is a perspective view illustrating a handling device in Fig. 7.
{Fig. 9B} Fig. 9B is a side view illustrating a relevant portion of the handling device in Fig. 7.
{Fig. 10} Fig. 10 is a perspective view illustrating an offshore wind-turbine installation ship according to a third embodiment of the present invention.
{Fig. 11} Fig. 11 is a plan view illustrating rail extension sections and a beam-direction moving member provided on a deck extension section.
{Fig. 12A} Fig. 12A is a rear view illustrating a state where a tower is being lowered toward a foundation, showing a pre-lowered state thereof.
{Fig. 12B} Fig. 12B is a rear view illustrating a state where the tower is being lowered toward the foundation, showing a lowered state thereof.
{Fig. 13} Fig. 13 is a perspective view illustrating a relevant portion of the stern of an offshore wind-turbine installation ship according to a fourth embodiment of the present invention.
{Fig. 14} Fig. 14 is a perspective view illustrating the relationship between a connection block of a foundation and an engagement section of a tower.
{Fig. 15} Fig. 15 is a perspective view illustrating a relevant portion of an offshore wind-turbine installation ship according to a fifth embodiment of the present invention.
{Fig. 16} Fig. 16 is a perspective view illustrating a derrick section of a transverse girder of a gantry crane in Fig. 15.
{Fig. 17} Fig. 17 is a plan view illustrating a process for allowing a tower of a wind turbine to pass through the transverse girder of the gantry crane in Fig. 15.

### {Description of Embodiments}

Embodiments of the present invention will be described below with reference to the drawings.

### {First Embodiment}

A first embodiment of the present invention will be described below.

Fig. 1 illustrates an offshore wind-turbine installation ship 1 (simply referred to as "ship 1" hereinafter) according to this embodiment and shows a state where a wind turbine 3 is being loaded onto the ship 1 at a dock. The ship 1 is of a so-called integral wind-turbine installation type that transports preassembled wind turbines, in their preassembled state, to a wind-turbine installation sea area and installs them in the sea area.

As shown in Fig. 1, each wind turbine 3 is preassembled onshore by combining a tower 5, a nacelle 7, and wind turbine blades 9, and the wind turbine 3 is loaded onto the ship 1. When loading each wind turbine 3 onto the ship 1 from the shore, the wind turbine 3 is hoisted by an onshore mobile crane 10, such as a jib crane. Fig. 1 illustrates a state where one of the wind turbines 3 is hoisted by the onshore crane 10, and Fig. 2 illustrates a state where the hoisted wind turbine 3 is lowered onto a deck of the ship 1.

The multiple loaded wind turbines 3 are arranged in the front-rear direction of the hull. In this embodiment, four wind turbines can be loaded.

The ship 1 is a jack-up ship that includes a jack-up device (not shown) and can secure a scaffold offshore by lowering a jack-up leg 2 (see Figs. 5 and 6) to the seafloor.

The ship 1 includes wind-turbine support structures 12 that stand upright on the deck and extend in the front-rear direction of the hull. The wind-turbine support structures 12 have a Rahmen structure (a frame structure) or a trussed structure and are provided at the left and right sides of the deck. Moreover, the wind-turbine support structures 12 are provided so as to sandwich the wind turbines 3 loaded on the deck from the left and right sides.

Rails 14 extending in the front-rear direction are provided along the upper edges of the wind-turbine support structures 12. A handling device 16 is configured to move on these rails 14.

Rail extension sections 15 extending rearward from the rails 14 are provided at the rear side (i.e., the right side in Fig. 1) of the wind-turbine support structures 12. The rail extension sections 15 are foldable. Figs. 1 and 2 illustrate the rail extension sections 15 in their protruded state. Fig. 6 illustrates the rail extension sections 15 in their folded state. Preferably, the rail extension sections 15 are protruded when installing each wind turbine 3 onto a foundation 30 (see Figs. 5 and 6) and are folded away at other times, such as when the ship is under sailing or when a wind turbine 3 is being loaded. Therefore, although Figs. 1 and 2 illustrate the rail extension sections 15 in their protruded state, this is for illustrative purposes only.

As shown in Figs. 3A, 3B, and 4, the handling device 16 is disposed on the rails 14 at the upper edges of the left and right wind-turbine support structures 12 and moves in a front-rear direction A of the hull. The handling device 16 includes a pair of left and right first carriages 18 that move on the rails 14 and a pair of left and right second carriages 20 that are disposed on the first carriages 18 and move in a beam direction B extending orthogonally to the rails 14. Hydraulic cylinders 22 stand upright on the second carriages 20. These hydraulic cylinders 22 make clamp supporters 26, which support clamps 28, reciprocate in a vertical direction C. Guide pipes 26a that extend in the vertical direction are fixed to the clamp supporters 26. The clamp supporters 26 are moved vertically by being guided by slide guides 24 that extend through the guide pipes 26a.

Each of the clamps 28 has a semicylindrical inner peripheral surface. As shown in Fig. 4, by moving the left and right clamps 28 toward each other, the clamps 28 engage from below with a protrusion 27 secured to the tower 5 of a wind turbine 3 while sandwiching and gripping the outer peripheral surface of the tower 5 from opposite sides. The protrusion 27 secured to the tower 5 is cylindrical and has a recess 27a at the underside thereof. The upper edges of the clamps 28 fit into the recess 27a so that the tower 5 can be lifted. Because the tower 5 is lifted by engaging the clamps 28 with the protrusion 27 instead of gripping the tower 5 with the frictional force of the clamps 28 alone, an excessive clamping force is not necessary, and the synchronization of the front-rear movement and the left-right movement between the left and right sides of the handling device 16 can be maintained.

While being maintained in this gripped state, the tower 5 is moved upward by the hydraulic cylinders 22 so that the entire wind turbine 3 can be lifted. Furthermore, by moving the second carriages 20 in synchronization with each other in one direction, the wind turbine 3 can be moved in the beam direction B.

After multiple wind turbines 3 are loaded at the dock, as shown in Figs. 1 and 2, the wind turbines 3 are secured to corresponding positions of the wind-turbine support structures 12 (this state is not illustrated). Then, the ship 1 travels to a wind-turbine installation sea area. In this case, the ship 1 may be self-propelled or may be towed by another tugboat.

When the wind-turbine installation sea area is reached, a wind-turbine installation process is performed.

First, a positioning process is performed for the ship 1 so that a preinstalled foundation 30 is positioned behind the hull. In this case, the position and the orientation of the hull are preferably controlled by a DPS (dynamic positioning system). After the position of the ship 1 is determined, the jack-up device of the ship 1 is activated and the lower end of the jack-up leg 2 is lowered to the seafloor so that the entire ship 1 is lifted, thereby securing the scaffold.

Fig. 5 illustrates a state where the foundation 30 is positioned behind the hull, and the scaffold of the ship 1 is secured by the jack-up device.

Because the wind turbines are secured to the wind-turbine support structures 12 when the ship 1 is under sailing, the secured state is released when a wind turbine is be installed. Furthermore, the rail extension sections 15 are protruded rearward, as shown in Fig. 5.

Then, the handling device 16 grips the tower 5 of the wind turbine 3 from a predetermined height position, which is located above a midsection of the tower 5, so as to lift the entire wind turbine 3 and move the wind turbine 3 along the rails 14 and the rail extension sections 15, thereby conveying the wind turbine 3 toward the rear of the hull. Because the rail extension sections 15 protrude to a position above the foundation 30, the handling device 16 is guided to the position above the foundation 30. After the wind turbine 3 is guided to the position above the foundation 30, the second carriages 20 (see Figs. 3A, 3B, and 4) of the handling device 16 move in the beam direction B so as to accurately position the wind turbine. Subsequently, the wind turbine 3 is lowered to the foundation 30, and the wind turbine 3 is connected to the foundation 30.

When the wind turbine 3 has been installed on the foundation 30, the left and right clamps 28 of the handling device 16 move away from each other so as to release the gripped state of the tower 5. The handling device 16 is then retracted toward the hull by being moved on the rail extension sections 15 and the rails 14. After the handling device 16 has been retracted to the hull, the rail extension sections 15 are folded away, the jack-up leg 2 is raised, and the ship 1 is moved to another foundation 30 where the next installation process is to be performed. The above-described installation process is performed for the number of loaded wind turbines 3. After all of the wind turbines 3 are installed, the ship returns to the home port. At the home port, multiple preassembled wind turbines are loaded onto the ship again, and the ship travels to the next wind-turbine installation sea area.

Accordingly, this embodiment exhibits the following advantages.

The ship 1 performs a so-called integral wind-turbine installation process in which wind turbines 3, each of which is preassembled by combining a tower 5, a nacelle 7, and wind turbine blades 9, in their preassembled state are transported to and installed in a wind-turbine installation sea area. Therefore, the need for assembling the wind turbines in the installation area can be eliminated.

Because the handling device 16 that moves in the front-rear direction of the hull and grips and lifts the tower 5 of a wind turbine 3 is provided, the wind turbine can be stably conveyed by gripping the tower 5 thereof when installing the wind turbine 3 onto the foundation 30. The handling device 16 moves to the position above the foundation 30 located behind the hull and installs the wind turbine 3 onto the foundation 30. Accordingly, when installing the wind turbine 3 onto the foundation 30, the wind turbine 3 is stably gripped and conveyed so that the process can be prevented from being interrupted due to strong winds, thereby shortening the installation process of the wind turbine 3.

Furthermore, the rails 14 on which the handling device 16 moves are provided along the upper edges of the wind-turbine support structures 12. Consequently, the handling device 16 grips the tower 5 at the predetermined height position (specifically, a position located above the midsection) thereof, meaning that the tower 5 can be gripped at a position located near the center of gravity of the wind turbine 3, whereby the wind turbine 3 can be stably conveyed. The height position of the rails 14 is not limited to the upper edges of the wind-turbine support structures 12 and may alternatively be located at an intermediate height position of the wind-turbine support structures 12 so long as the position is appropriate for gripping the tower 5.

Furthermore, the rail extension sections 15 that extend to the position above the foundation 30 are provided, and these rail extension sections 15 are retractable toward the hull. Therefore, when positioning the ship 1 by moving it closer toward the foundation 30, the rail extension sections 15 are prevented from hindering the process. In addition, when the ship 1 floats and rocks on the water as a result of raising the jack-up leg 2 after installing the wind turbine 3 on the foundation 30, the rail extension sections 15 can be prevented from coming into contact with the wind turbine 3.

### {Second Embodiment}

Next, a second embodiment of the present invention will be described with reference to Figs. 7 to 9B.

This embodiment differs from the first embodiment in the method for supporting and conveying a wind turbine 3. Since other points are the same as those in the first embodiment, the following description will be directed to the differences therefrom. Therefore, this embodiment is similar to the first embodiment in that a so-called integral wind-turbine installation process, in which preassembled wind turbines in their preassembled state are transported to and installed in a wind-turbine installation sea area, is performed.

In this embodiment, a handling device 29 is disposed on the deck and moves in the front-rear direction of the hull along a deck rail provided on the deck. As shown in Figs. 9A and 9B, the handling device 29 lifts the tower 5 of a wind turbine 3 from a lower part thereof. Specifically, the handling device 29 uses clamps 36 to engage with a protrusion 35, which is provided below the tower 5, and the lower end of the tower 5 from below so as to lift the tower 5. The handling device 29 is similar to the handling device 16 according to the first embodiment in that it is movable in the front-rear direction A, the beam direction B, and the vertical direction C of the hull.

A support device 31 that grips and supports the tower 5 of the wind turbine 3 is provided on the rails 14 of the wind-turbine support structures 12. Similar to the handling device 16 in the first embodiment, the support device 31 uses left and right clamps to grip and support the tower 5 from opposite sides. However, since the wind turbine 3 is lifted by the handling device 29 provided on the deck, the support device 31 does not have a function for lifting the wind turbine 3.

As shown in Figs. 8, 9A, and 9B, a deck extension section 37 that extends to the position above the foundation 30 located behind the hull is provided. The deck extension section 37 is provided with deck-rail extension sections 38 (see Figs. 9A and 9B) extending from deck rails 33. The handling device 29 is capable of moving on the deck extension section 37. As shown in Fig. 8, the deck extension section 37 is retractable toward the hull.

This embodiment exhibits the following advantages.

When conveying a wind turbine 3, the handling device 29 lifts the tower 5 from a lower part thereof, and the support device 31 supports the tower 5 at a predetermined height position thereof, so that the tower is conveyed while being supported at two positions, i.e., the lower part and the predetermined height position (specifically, a position located above the midsection), of the tower 5, whereby the wind turbine 3 can be stably conveyed.

Furthermore, the deck extension section 37 and the deck-rail extension sections extending to the position above the foundation 30 are provided in a manner allowing them to be retracted toward the hull. Therefore, when positioning the ship 1 by moving it closer toward the foundation 30, these extension sections are prevented from hindering the process. In addition, when the ship 1 floats and rocks on the water as a result of raising the jack-up leg 2 after installing the wind turbine 3 on the foundation 30, the deck extension section 37 and the rail extension sections 15 can be prevented from coming into contact with the wind turbine 3 and the foundation 30.

Furthermore, when the handling device 29 grips and lifts the tower of the wind turbine, the handling device 29 engages with the protrusion 35 of the tower and the lower end of the tower 5 so as to lift the tower 5. Therefore, like the handling device 16 according to the first embodiment, an excessive clamping force is not necessary, thereby preventing the tower from receiving an excessive force.

### {Third Embodiment}

Next, a third embodiment of the present invention will be described with reference to Figs. 10 to 12B.

This embodiment differs from the second embodiment in that a carriage 42 is used in place of the handling device 29. Since other points are the same as those in the second embodiment, the following description will be directed to the differences therefrom. Therefore, this embodiment is similar to the first and second embodiments in that a so-called integral wind-turbine installation process, in which preassembled wind turbines in their preassembled state are transported to and installed in a wind-turbine installation sea area, is performed.

Fig. 10 illustrates a state where a wind turbine 3 is installed on a foundation 30. Similar to the second embodiment, the ship 1 includes the rail extension sections 15 and the support device 31, as shown in Fig. 10.

In this embodiment, the carriage 42 (see Figs. 12A and 12B) that moves on the deck in the front-rear direction of the hull while the wind turbine 3 is placed thereon conveys the wind turbine 3. Specifically, the lower end of the tower 5 of the wind turbine 3 is placed on the carriage 42. The deck extension section 37 is provided with rail extension sections 44 that are connectable to the deck rails 33 provided on the deck. The carriage 42 is movable on the rail extension sections 44 to a position above the foundation 30.

The rail extension sections 44 are disposed on a beam-direction moving member (beam-direction moving means) 46 that moves in the beam direction. The beam-direction moving member 46 is constituted of a pair of beam members that extend in the beam direction (i.e., left-right direction in Figs. 11, 12A, and 12B), and each beam member is provided with wheels 48. The wheels 48 roll on the deck extension section 37 so as to move the beam-direction moving member 46 and the rail extension sections 44 in the beam direction.

Furthermore, as shown in Figs. 12A and 12B, the rail extension sections 44 and the beam-direction moving member 46 are movable in the vertical direction by vertical-direction moving means (not shown), such as a hydraulic jack. As shown in Fig. 12B, an upper surface 50 of the foundation 30 is provided with a recess 49 such that the rail extension sections 44 and the beam-direction moving member 46 can fit into a lower area of the upper surface 50. Consequently, by lowering the rail extension sections 44 and the beam-direction moving member 46 into the recess 49 by using the vertical-direction moving means, the lower end of the tower 5 of the wind turbine 3 can be placed on the upper surface 50 of the foundation 30.

The following description relates to a procedure for installing the wind turbine 3 onto the foundation 30 by using the carriage 42.

When loading the wind turbine 3 onto the ship 1 at the home port, the wind turbine 3 is set on the carriage 42. When installing the wind turbine 3 onto the foundation 30, the carriage 42 on which the wind turbine 3 is placed is moved on the deck rails 33 (see Fig. 11) toward the rear of the hull. Then, the carriage 42 is moved until it reaches the rail extension sections 44 connected to the deck rails 33. When the carriage 42 reaches the position above the foundation 30, the carriage 42 is stopped and is positionally adjusted in the beam direction by operating the beam-direction moving member 46. After the wind turbine 3 is set in position, the rail extension sections 44, the beam-direction moving member 46, the carriage 42, and the wind turbine 3 are lowered by the vertical-direction moving means. Then, in a state where the rail extension sections 44 and the beam-direction moving member 46 are fitted within the recess 49 of the foundation 30, as shown in Fig. 12B, the lower end of the tower 5 of the wind turbine 3 is placed and set on the upper surface 50 of the foundation 30.

This embodiment exhibits the following advantages.

Because the carriage 42 that moves on the deck rails 33 and the rail extension sections 44 while a wind turbine 3 is placed on the carriage 42 conveys the wind turbine 3, the wind turbine 3 can be stably conveyed. Moreover, because the upper position of the tower 5 is supported by the support device 31, the wind turbine 3 can be conveyed more stably.

Furthermore, since a wind turbine can be conveyed without having to employ a configuration that grips and lifts the tower 5 of the wind turbine 3 (see the first embodiment), the tower is prevented from receiving an excessive force.

### {Fourth Embodiment}

Next, a fourth embodiment of the present invention will be described with reference to Figs. 13 and 14.

This embodiment differs from the second and third embodiments in that a pushing device 53 is used when conveying a wind turbine 3 toward a foundation 30. Since other points are the same as those in the second and third embodiments, the following description will be directed to the differences therefrom. Therefore, this embodiment is similar to the first to third embodiments in that a so-called integral wind-turbine installation process, in which preassembled wind turbines in their preassembled state are transported to and installed in a wind-turbine installation sea area, is performed.

As shown in Fig. 13, the pushing device 53 is disposed at the stern of the ship 1. The pushing device 53 includes wheels 55 and is movable. The pushing device 53 is used when conveying a wind turbine 3 conveyed to the stern of the ship 1 toward a foundation 30. Therefore, at the stern of the ship 1, the handling device 16 or 29 and the carriage 42 described in the above embodiments can be used to convey the wind turbine 3.

The pushing device 53 includes hydraulic cylinders 58 that push the lower end of the tower 5 of the wind turbine 3. When pushing the wind turbine 3 outward, the wind turbine 3 receives a reaction force from a cable 56 fixed to the main body of the ship 1.

A connection bridge 57 is provided between the foundation 30 and the ship 1. The connection bridge 57 is surface-treated so that the wind turbine 3 can readily slide thereon. The connection bridge 57 is configured to protrude outward during the installation process of the wind turbine 3 and is retractable toward the hull when the ship 1 is under sailing.

A connection block 59 is.fixed to the upper end of the foundation 30. The connection block 59 is provided with a connection recess 60. As shown in Fig. 14, the connection recess 60 has a shape that corresponds to an engagement section 62 provided at the lower end of the tower 5 of the wind turbine 3. Moreover, a flange 64 that covers the rim of the connection recess 60 from above is provided so that the engagement section 62 of the tower 5 can be fitted and temporarily secured to the connection recess 60, whereby the tower can be fixed to the foundation 30 without having to adjust the position of a bolt hole (not shown).

The following description relates to how the wind turbine 3 is installed onto the foundation 30 by using the pushing device 53.

The lower end of the tower 5 of the wind turbine 3 is pushed by the hydraulic cylinders 58 of the pushing device 53. Thus, the wind turbine 3 is pushed toward the foundation 30. Although not shown, an upper position of the tower 5 of the wind turbine 3 is supported by the support device 31 described in the second embodiment.

When the wind turbine 3 is pushed outward by the pushing device 53, the wind turbine 3 slides on the connection bridge 57 so as to approach the connection block 59 of the foundation 30 connected to the connection bridge, and the engagement section 62 of the tower 5 becomes fitted into the connection recess 60 formed in the connection block 59.

Accordingly, with this embodiment, the wind turbine 3 becomes temporarily secured to the foundation 30 simultaneously with the pushing process, whereby the installation process is simplified.

Moreover, the foundation 30 and the deck are connected to each other by the connection bridge 57, and the wind turbine 3 is conveyed by being slid on the connection bridge 57 by the pushing device 53 that pushes the lower part of the wind turbine 3 toward the foundation 30, whereby the wind turbine 3 can be stably conveyed.

### {Fifth Embodiment}

Next, a fifth embodiment of the present invention will be described with reference to Figs. 15 to 17.

This embodiment differs from the above embodiments in that a wind turbine 3 is conveyed by using a gantry crane 70. Since other points are the same as those in the above embodiments, the following description will be directed to the differences therefrom. Therefore, this embodiment is similar to the above embodiments in that a so-called integral wind-turbine installation process, in which preassembled wind turbines in their preassembled state are transported to and installed in a wind-turbine installation sea area, is performed.

The gantry crane 70 is movable in the front-rear direction of the hull along rails 72 provided on the deck of the ship 1. Although not shown, a deck extension section is provided as in the second embodiment so that the gantry crane 70 is movable to a position above a foundation. The gantry crane 70 fetches a wind turbine 3 loaded on the ship 1, hoists the wind turbine 3, and then installs the wind turbine 3 onto a foundation.

The gantry crane 70 includes a moving device (not shown), left and right upright legs 76, and a transverse girder 74 that connects the upper ends of the two legs 76. A control room 80 is provided above the transverse girder 74. The control room 80 is movable along the transverse girder 74.

A midsection of the transverse girder 74 is provided with a derrick section 78 that is capable of moving in a derricking motion. The derrick section 78 is rotatable about one end thereof acting as a fulcrum. When a wind turbine 3 is not to be conveyed, the derrick section 78 is set in a horizontal position so as to be linearly connected to the transverse girder 74. When a wind turbine 3 is to be conveyed, the derrick section 78 is set in a vertical position. Fig. 15 illustrates the derrick section 78 in the vertical position. In this position, the wind turbine 3 can pass through the transverse girder 74.

Fig. 16 also illustrates the derrick section 16 in the vertical position. As shown in Fig. 16, the derrick section 78 is made to move in a derricking motion by a hydraulic cylinder 81. Reference numeral 82 in Fig. 16 denotes a rail for moving the control room 80. Extendable rods 84 are provided below the derrick section 78.

As shown in Fig. 17, there are two extendable rods 84 arranged parallel to each other in the moving direction of the gantry crane 70 and are capable of extending from one segment of the transverse girder 74 to the other opposing segment of the transverse girder 74 by means of oil pressure from hydraulic cylinders 86. The extendable rods 84 are normally in an extended state to connect the two segments of the transverse girder 74 but are contracted when allowing the tower 5 of the wind turbine 3 to pass through the transverse girder 74. Specifically, as shown in Fig. 17, when the tower 5 is at position a, the two extendable rods 84a and 84b extend so as to connect to the opposing segments of the transverse girder 74. When the gantry crane 70 moves to fetch the wind turbine 3, the right extendable rod 84a is contracted so that the tower 5 can be moved to position b. When the gantry crane 70 moves further so that the tower 5 is moved to position c, the right extendable rod 84 extends so as to connect to the opposing segment of the transverse girder 74. When the tower 5 is at position c, the tower 5 extends crosswise to the transverse girder 74 such that the tower 5 is supported in a sandwiched state between the extendable rods 84a and 84b. Consequently, the tower 5 is prevented from falling. This state in which the tower 5 and the transverse girder 74 extend crosswise to each other is schematically illustrated in Fig. 15.

As shown in Fig. 15, the weight of the wind turbine 3 is received by hoist cables 88 hanging downward from the transverse girder 74. The lower ends of the hoist cables 88 are connected to the lower end of the tower 5 and hoist the wind turbine 3 from a lower part thereof. The hoist cables 88 can be wound and unwound by winding drums (not shown) provided in the transverse girder 74 so that the hoisted wind turbine 3 can be moved in the vertical direction. The lower end of the wind turbine 3 is also secured to three cables 90 so that swinging of the lower end of the wind turbine 3 is suppressed.

As shown in Fig. 17, after installing the wind turbine 3 onto the foundation, the left extendable rod 84b is contracted so that the tower 5 can be moved to position d. Then, when the gantry crane 70 moves further so that the tower 5 is moved to position e, the left extendable rod 84b extends so as to connect to the opposing segment of the transverse girder 74. Accordingly, after installing the wind turbine, the gantry crane 70 moves away from the wind turbine 3 so as to return toward the hull.

This embodiment exhibits the following advantages.

The gantry crane 70 that hoists the wind turbine 3 from the lower end thereof is used, and the tower 5 is supported in a state where the tower 5 and the horizontally-extending transverse girder 74 of the gantry crane 70 extend crosswise to each other. Therefore, the wind turbine is lifted while the tower 5 is supported at two positions, i.e., the lower end and a predetermined height position thereof, whereby the wind turbine can be stably conveyed. Accordingly, when installing the wind turbine 3 onto the foundation, the wind turbine 3 can be stably supported and conveyed so that the process can be prevented from being interrupted due to strong winds, thereby shortening the installation process of the wind turbine.

### {Reference Signs List}

- 1: ship (offshore wind-turbine installation ship)
- 3: wind turbine
- 5: tower
- 12: wind-turbine support structure
- 14: rail
- 15: rail extension section
- 16, 29: handling device
- 30: foundation
- 31: support device
- 37: deck extension section
- 42: carriage
- 53: pushing device
- 57: connection bridge
- 70: gantry crane

## Claims

1. An offshore wind-turbine installation ship (1) on which a plurality of wind turbines (3), each of which is preassembled by combining a tower (5), a nacelle (7), and wind turbine blades (9), can be loaded and arranged in a front-rear direction (A) of a hull and that is self-propelled or towed to a wind-turbine installation sea area where the ship (1) is to install each wind turbine (3) onto a preinstalled foundation (30), the ship (1) comprising:
a handling device (16;29;42;70) that is arranged to move in the front-rear direction (A) of the hull and grip and lift the tower (5) of the wind turbine (3),
**characterised in that**, when installing the wind turbine (3) onto the foundation (30), the handling device (16;29;42;70) is arranged to grip and lift the tower (5) of the wind turbine (3) and move on a rail (14;33;33;72) to a position above the foundation (30) located behind the hull so as to install the wind turbine (3) onto the foundation (30),
wherein the ship (1) is provided with a rail extension section (15;38;44) extending from the rail (14;33;33;72) to the position above the foundation (30) located behind the hull, and
wherein the rail extension section (15;38;44) is retractable toward the hull.

2. The offshore wind-turbine installation ship (1) according to Claim 1, further comprising a wind-turbine support structure (12) that stands upright on a deck and extends in the front-rear direction (A) of the hull, the wind-turbine support structure arranged to support the wind turbines (3) loaded on the deck,
wherein the rail (14) is provided at a predetermined height position of the wind-turbine support structure (12).

3. The offshore wind-turbine installation ship (1) according to Claim 2, wherein the wind-turbine support structure (12) is provided with the rail extension section (15) extending from the rail (14) to the position above the foundation (30) located behind the hull.

4. The offshore wind-turbine installation ship (1) according to Claim 1, further comprising:
a wind-turbine support structure (12) that stands upright on a deck and extends in the front-rear direction (A) of the hull, the wind-turbine support structure (12) arranged to support the wind turbines (3) loaded on the deck; and
a support device (31) arranged to support the tower (5) of the wind turbine (3) while moving on a structure rail (14) that is provided at a predetermined height position of the wind-turbine support structure (12) and extends in the front-rear direction (A) of the hull,
wherein the handling device (29) is arranged to move on the rail (33) provided on the deck, and
wherein, when conveying the wind turbine (3), the handling device (29) is arranged to lift the tower (5) from a lower part thereof, and the support device (12) is arranged to support the tower (5) at a predetermined height position thereof.

5. The offshore wind-turbine installation ship (1) according to Claim 4, wherein the wind-turbine support structure (12) is provided with a structure-rail extension section (15) extending from the structure rail (14) to the position above the foundation (30) located behind the hull,
wherein the deck includes a deck extension section (37) that extends to the position above the foundation (30) located behind the hull,
wherein the deck extension section (37) is provided with the deck-rail extension section (38) extending from the rail (33) provided on the deck toward a stern, and
wherein the structure-rail extension section (15) and the deck extension section (37) are retractable toward the hull.

6. The offshore wind-turbine installation ship (1) according to any one of Claims 4 to 6, wherein the support device (12) is arranged to move by following the position of the handling device (16).

7. The offshore wind-turbine installation ship (1) according to any one of Claims 1 to 6, wherein the handling device (16;29) is movable in a beam direction (B) extending orthogonally to the front-rear direction (A) of the hull.

8. The offshore wind-turbine installation ship (1) according to Claim 1, wherein
the rail (33) is provided on a deck and extends in the front-rear direction (A) of the hull;
a carriage (42) is provided that is arranged to move on the rail (33) in a state where the wind turbine (3) is placed on the carriage (42);
the rail extension section (44) that extends to the position above the foundation (30) located behind the hull is connectable to the rail (33);
beam-direction moving means (46) is provided that makes the rail extension section (44) movable in a beam direction (B) extending orthogonally to the front-rear direction (A) of the hull; and
vertical-direction moving means is provided that is arranged to move in the vertical direction so as to move the rail extension section (44) and the beam-direction moving means (46) toward the foundation (30) in the state where the wind turbine (3) is placed on the carriage (42) and to install the wind turbine (3) onto the foundation (30),
wherein the beam-direction moving means (46) and the vertical-direction moving means are retractable toward the hull.

9. The offshore wind-turbine installation ship (1) according to Claim 1, comprising:
a gantry crane (70) arranged to move in the front-rear direction (A) of the hull on the rail (72) provided on a deck of the ship (1) and to hoist the wind turbine (3),
wherein, when installing the wind turbine (3) onto the foundation (30), the gantry crane (70) is arranged to support the wind turbine (30) in a state where a horizontally-extending girder (74) and the tower (5) of the wind turbine (3) extend crosswise to each other and to move to the position above the foundation (30) located behind the hull while hoisting the wind turbine (3) from a lower end thereof so as to install the wind turbine (3) onto the foundation (30).

10. The offshore wind-turbine installation ship (1) according to Claim 9, further comprising a deck extension section (37) that extends to the position above the foundation (30) located behind the hull,
wherein the gantry crane (70) is arranged to move on the deck extension section (37) and is guided to the position above the foundation (30), and
wherein the deck extension section (37) is retractable toward the hull.

11. An offshore wind-turbine installation ship (1) on which a plurality of wind turbines (3), each of which is preassembled by combining a tower (5), a nacelle (7), and wind turbine blades (9), are to be loaded and arranged in a front-rear direction (A) of a hull and that is self-propelled or towed to a wind-turbine installation sea area where the ship (1) is to install each wind turbine (3) onto a preinstalled foundation (30), **characterised by** the ship (1) comprising:
a connection bridge (57) arranged to connect the foundation (30) located behind the hull and a deck on the hull; and
a pushing device (53) arranged to push a lower part of the wind turbine (3) loaded on the deck toward the foundation (30) such that the wind turbine (3) is pushed outward by the pushing device (53) so as to be conveyed onto the foundation (30) while sliding on the connection bridge (57).

12. The offshore wind-turbine installation ship (1) according to Claim 11, wherein a lower end of the tower (5) of the wind turbine (3) is provided with an engagement section (62) having a shape that is engageable with a recess (60) formed in the foundation (30).

13. An offshore wind-turbine installation method using an offshore wind-turbine installation ship (1) according to claim 1 on which a plurality of wind turbines (3), each of which is preassembled by combining a tower (5), a nacelle (7), and wind turbine blades (9), are loaded and arranged in the front-rear direction (A) of the hull and that is self-propelled or towed to a wind-turbine installation sea area where the ship (1) installs each wind turbine (3) onto a preinstalled foundation (30),
wherein, when installing the wind turbine (3) onto the foundation, the handling device (16;29;42;70) grips and lifts the tower (5) of the wind turbine (3) and moves on the rail (14;33;33;72) and the rail extension section (15;38;44) to a position above the foundation (30) located behind the hull so as to install the wind turbine (3) onto the foundation (30).

14. An offshore wind-turbine installation method using an offshore wind-turbine installation ship (1) according to claim 8 on which a plurality of wind turbines (3), each of which is preassembled by combining a tower (5), a nacelle (7), and wind turbine blades (9), are loaded and arranged in the front-rear direction (A) of the hull and that is self-propelled or towed to a wind-turbine installation sea area where the ship (1) installs each wind turbine (3) onto a preinstalled foundation,
wherein the carriage (42) moves on the rail (33) in a state where the wind turbine (3) is placed on the carriage (42);
the rail extension section (44) that extends to a position above the foundation (30) located behind the hull is connected to the rail (33); and
the vertical-direction moving means moves in the vertical direction so as to move the rail extension section (44) and the beam-direction moving means (46) toward the foundation (30) in the state where the wind turbine (3) is placed on the carriage (42) and to install the wind turbine (3) onto the foundation (30).

15. An offshore wind-turbine installation method using an offshore wind-turbine installation ship (1) according to claim 9 on which a plurality of wind turbines (3), each of which is preassembled by combining a tower (5), a nacelle (7), and wind turbine blades (9), are loaded and arranged in the front-rear direction (A) of the hull and that is self-propelled or towed to a wind-turbine installation sea area where the ship (1) installs each wind turbines (3) onto a preinstalled foundation (30),
wherein, when installing the wind turbine (3) onto the foundation (30), the gantry crane (70) supports the wind turbine (3) in a state where a horizontally-extending girder (74) and the tower (5) of the wind turbine (3) extend crosswise to each other and moves to a position above the foundation (30) located behind the hull while hoisting the wind turbine (3) from a lower end thereof so as to install the wind turbine (3) onto the foundation (30).

16. An offshore wind-turbine installation method using an offshore wind-turbine installation ship (1) according to claim 11 on which a plurality of wind turbines (3), each of which is preassembled by combining a tower (5), a nacelle (7), and wind turbine blades (9), are loaded and arranged in the front-rear direction (A) of the hull and that is self-propelled or towed to a wind-turbine installation sea area where the ship (1) installs each wind turbine (3) onto a preinstalled foundation (30),
wherein the connection bridge (57) connects the foundation (30) located behind the hull and the deck on the hull; and
wherein the pushing device (53) pushes a lower part of the wind turbine (3) loaded on the deck toward the foundation (30), and
wherein the wind turbine (3) is pushed outward by the pushing device (53) so as to be conveyed onto the foundation (30) while sliding on the connection bridge (57).

## Patentansprüche

1. Ein Offshore-Windturbinen-Installationsschiff (1), auf das eine Vielzahl von Windturbinen (3), von denen jede durch Verbinden eines Turms (5), einer Gondel (7) und von Windturbinenschaufeln (9) vormontiert ist, geladen und in einer Vorne-Hinten-Richtung (A) eines Schiffskörpers angeordnet werden können, und das zu einem Windturbinen-Installations-Seegebiet, wo das Schiff (1) jede Windturbine (3) auf einem vorinstallierten Fundament (30) installieren soll, selbst fährt oder geschleppt wird, wobei das Schiff (1) aufweist:
eine Handhabungsvorrichtung (16;29;42;70), die so angeordnet ist, dass sie sich in der Vorne-Hinten-Richtung (A) des Schiffskörpers bewegen und den Turm (5) der Windturbine (3) greifen und anheben kann,
**dadurch gekennzeichnet, dass**, wenn die Windturbine (3) auf dem Fundament (30) installiert wird, die Handhabungsvorrichtung (16;29;42;70) angeordnet ist, um den Turm (5) der Windturbine (3) zu greifen und anzuheben und sich auf einer Schiene (14;33;33;72) zu einer Position über dem Fundament (30), welches sich hinter dem Schiffskörper befindet, zu bewegen, um die Windturbine (3) auf dem Fundament (30) zu installieren,
wobei das Schiff (1) mit einem Schienen-Erweiterungsabschnitt (15;38;44) versehen ist, der sich von der Schiene (14;33;33;72) zu der Position über dem Fundament (30), welches sich hinter dem Schiffskörper befindet, erstreckt, und
wobei der Schienen-Erweiterungsabschnitt (15;38;44) zu dem Schiffskörper zurückziehbar ist.

2. Das Offshore-Windturbinen-Installationsschiff (1) gemäß Anspruch 1, ferner mit einer Windturbinen-Tragstruktur (12), die aufrecht auf einem Deck steht und sich in der Vorne-Hinten-Richtung (A) des Schiffskörpers erstreckt, wobei die Windturbinen-Tragstruktur angeordnet ist, um die auf dem Deck geladenen Windturbinen (3) zu tragen bzw. abzustützen,
wobei die Schiene (14) an einer vorbestimmten Höhenposition der Windturbinen-Tragstruktur (12) vorgesehen ist.

3. Das Offshore-Windturbinen-Installationsschiff (1) gemäß Anspruch 2, wobei die Windturbinen-Tragstruktur (12) mit dem Schienen-Erweiterungsabschnitt (15) versehen ist, der sich von der Schiene (14) zu der Position über dem Fundament (30), welches sich hinter dem Schiffskörper befindet, erstreckt.

4. Das Offshore-Windturbinen-Installationsschiff (1) gemäß Anspruch 1, ferner mit:
einer Windturbinen-Tragstruktur (12), die aufgerichtet auf einem Deck steht und sich in der Vorne-Hinten-Richtung (A) des Schiffskörpers erstreckt, wobei die Windturbinen-Tragstruktur (12) angeordnet ist, um die auf dem Deck geladenen Windturbinen (3) zu tragen bzw. zu stützen, und
einer Tragvorrichtung (31), die angeordnet ist, um den Turm (5) der Windturbine (3) zu tragen, während sie sich auf einer Strukturschiene (14) bewegt, die in einer vorbestimmten Höhenposition der Windturbinen-Tragstruktur (12) vorgesehen ist und sich in der Vorne-Hinten-Richtung (A) des Schiffskörpers erstreckt,
wobei die Handhabungsvorrichtung (29) angeordnet ist, um sich auf der Schiene (33), welche auf dem Deck vorgesehen ist, zu bewegen, und
wobei, wenn die Windturbine (3) bewegt wird, die Handhabungsvorrichtung (29) angeordnet ist, um den Turm (5) an einem unteren Teil davon anzuheben, und die Tragvorrichtung (12) angeordnet ist, um den Turm (5) an einer vorbestimmten Höhenposition davon zu tragen bzw. zu stützen.

5. Das Offshore-Windturbinen-Installationsschiff (1) gemäß Anspruch 4, wobei die Windturbinen-Tragstruktur (12) mit einem Strukturschienen-Erweiterungsabschnitt (15) versehen ist, der sich von der Strukturschiene (14) zu der Position über dem Fundament (30), welches sich hinter dem Schiffskörper befindet, erstreckt,
wobei das Deck einen Deck-Erweiterungsabschnitt (37) aufweist, der sich zu der Position über dem Fundament (30), welches sich hinter dem Schiffskörper befindet, erstreckt,
wobei der Deck-Erweiterungsabschnitt (37) mit dem Deckschienen-Erweiterungsabschnitt (38) versehen ist, der sich von der Schiene (33), welche auf dem Deck vorgesehen ist, zu einem Heck erstreckt, und
wobei der Strukturschienen-Erweiterungsabschnitt (15) und der Deck-Erweiterungsabschnitt (37) zu dem Schiffskörper hin zurückziehbar sind.

6. Das Offshore-Windturbinen-Installationsschiff (1) gemäß einem der Ansprüche 4 bis 6, wobei die Tragvorrichtung (12) angeordnet ist, um sich zu bewegen, indem sie der Position der Handhabungsvorrichtung (16) folgt.

7. Das Offshore-Windturbinen-Installationsschiff (1) gemäß einem der Ansprüche 1 bis 6, wobei die Handhabungsvorrichtung (16; 29) in einer Trägerrichtung (B) bewegbar ist, die sich orthogonal zu der Vorne-Hinten-Richtung (A) des Schiffskörpers erstreckt.

8. Das Offshore-Windturbinen-Installationsschiff (1) gemäß Anspruch 1, wobei
die Schiene (33) auf einem Deck vorgesehen ist und sich in der Vorne-Hinten-Richtung (A) des Schiffskörpers erstreckt,
ein Schlitten (42) vorgesehen ist, der zur Bewegung auf der Schiene (33) in einem Zustand, bei dem die Windturbine (3) auf dem Schlitten (42) platziert ist, vorgesehen ist,
der Schienen-Erweiterungsabschnitt (44), der sich zu der Position über dem Fundament (33), das sich hinter dem Schiffskörper befindet, erstreckt, mit der Schiene (33) verbindbar ist,
ein Trägerrichtungs-Bewegungsmittel (46) vorgesehen ist, das den Schienen-Erweiterungsabschnitt (44) in einer Trägerrichtung (B), die sich orthogonal zu der Vorne-Hinten-Richtung (A) des Schiffskörpers erstreckt, bewegbar macht, und
ein Vertikalrichtungs-Bewegungsmittel vorgesehen ist, das angeordnet ist, um sich in der vertikalen Richtung so zu bewegen, dass der Schienen-Erweiterungsabschnitt (44) und das Trägerrichtungs-Bewegungsmittel (46) zu dem Fundament (30) bewegt werden, in dem Zustand, in dem die Windturbine (3) auf dem Schlitten (42) platziert ist, und um die Windturbine (3) auf dem Fundament (30) zu installieren,
wobei das Trägerrichtungs-Bewegungsmittel (46) und das Vertikalrichtungs-Bewegungsmittel zu dem Schiffskörper zurückziehbar sind.

9. Das Offshore-Windturbinen-Installationsschiff (1) gemäß Anspruch 1, mit:
einem Portalkran (70), der angeordnet ist, um sich in der Vorne-Hinten-Richtung (A) des Schiffskörpers auf der Schiene (72), die auf einem Deck des Schiffs (1) vorgesehen ist, zu bewegen und um die Windturbine (3) hochzuheben,
wobei, wenn die Windturbine (3) auf dem Fundament (30) installiert wird, der Portalkran (70) angeordnet ist, um die Windturbine (30) in einem Zustand zu tragen, in dem sich ein horizontal erstreckender Tragbalken (74) und der Turm (5) der Windturbine (3) gekreuzt zueinander erstrecken und um sich zu der Position über dem Fundament (30), welches sich hinter dem Schiffskörper befindet, zu bewegen, während die Windturbine (3) an einem unteren Ende davon hochgehoben wird, um die Windturbine (3) auf dem Fundament (30) zu installieren.

10. Das Offshore-Windturbinen-Installationsschiff (1) gemäß Anspruch 9, ferner mit einem Deck-Erweiterungsabschnitt (37), der sich zu der Position über dem Fundament (30), welches sich hinter dem Schiffskörper befindet, erstreckt,
wobei der Portalkran (70) angeordnet ist, um sich auf dem Deck-Erweiterungsabschnitt (37) zu bewegen und er zu der Position über dem Fundament (30) geführt wird, und
wobei der Deck-Erweiterungsabschnitt (37) zu dem Schiffskörper zurückziehbar ist.

11. Ein Offshore-Windturbinen-Installationsschiff (1), auf das eine Vielzahl von Windturbinen (3), von denen jede durch Verbinden eines Turms (5), einer Gondel (7) und von Windturbinenschaufeln (9) vormontiert ist, in einer Vorne-Hinten-Richtung eines Schiffskörpers zu laden und anzuordnen sind, und das zu einem Windturbinen-Installations-Seegebiet, wo das Schiff (1) jede Windturbine (3) auf einem vorinstallierten Fundament (30) installieren soll, selbst fährt oder geschleppt wird, **dadurch gekennzeichnet, dass** das Schiff (1) aufweist:
eine Verbindungsbrücke (57), die angeordnet ist, um das Fundament (30), welches sich hinter dem Schiffskörper befindet, und ein Deck auf dem Schiffskörper zu verbinden, und
eine Schiebevorrichtung (53), die angeordnet ist, um einen unteren Teil der Windturbine (3), die auf das Deck geladen ist, zu dem Fundament (30) zu schieben, derart, dass die Windturbine (3) durch die Schiebevorrichtung (53) so nach außen gedrückt wird, dass sie auf das Fundament (30) bewegt wird, während sie auf der Verbindungsbrücke (57) gleitet.

12. Das Offshore-Windturbinen-Installationsschiff (1) gemäß Anspruch 11, wobei ein unteres Ende des Turms (5) der Windturbine (3) mit einem Eingriffsabschnitt (62) versehen ist, der eine Form besitzt, die mit einer Ausnehmung (60), welche in dem Fundament (30) ausgebildet ist, in Eingriff bringbar ist.

13. Ein Offshore-Windturbinen-Installationsverfahren unter Verwendung eines Offshore-Windturbinen-Installationsschiffs (1) gemäß Anspruch 1, auf das eine Vielzahl von Windturbinen (3), von denen jede durch Verbinden eines Turms (5), einer Gondel (7) und von Windturbinenschaufeln (9) vormontiert ist, geladen und in der Vorne-Hinten-Richtung (A) des Schiffskörpers angeordnet sind bzw. werden, und das zu einem Windturbinen-Installations-Seegebiet, wo das Schiff (1) jede Windturbine (3) auf einem vorinstallierten Fundament (30) installiert, selbst fährt oder geschleppt wird,
wobei, wenn die Windturbine (3) auf dem Fundament installiert wird, die Handhabungsvorrichtung (16;29;42;70) den Turm (5) der Windturbine (3) greift und anhebt und sich auf der Schiene (14; 33; 33, 72) und dem Schienen-Erweiterungsabschnitt (15; 38; 44) zu einer Position über dem Fundament (30), welches sich hinter dem Schiffskörper befindet, so bewegt, dass die Windturbine (3) auf dem Fundament (30) installiert wird.

14. Ein Offshore-Windturbinen-Installationsverfahren unter Verwendung eines Offshore-Windturbinen-Installationsschiffs (1) gemäß Anspruch 8, auf das eine Vielzahl von Windturbinen (3), von denen jede durch Verbinden eines Turms (5), einer Gondel (7) und von Windturbinenschaufeln (9) vormontiert ist, geladen und in der Vorne-Hinten-Richtung (A) des Schiffskörpers angeordnet sind bzw. werden, und das zu einem Windturbinen-Installations-Seegebiet, wo das Schiff (1) jede Windturbine (3) auf einem vorinstallierten Fundament installiert, selbst fährt oder geschleppt wird,
wobei der Schlitten (42) sich auf der Schiene (33) in einem Zustand bewegt, wo die Windturbine (3) auf dem Schlitten (42) platziert ist,
der Schienen-Erweiterungsabschnitt (44), der sich zu einer Position über dem Fundament (30), welches sich hinter dem Schiffskörper befindet, erstreckt, mit der Schiene (33) verbunden wird, und
das Vertikalrichtungs-Bewegungsmittel sich in der Vertikalrichtung bewegt, um den Schienen-Erweiterungsabschnitt (44) und das Trägerrichtungs-Bewegungsmittel (46) zu dem Fundament (30) in dem Zustand, wo die Windturbine (33) auf dem Schlitten (42) platziert ist, zu bewegen und um die Windturbine (3) auf dem Fundament (30) zu installieren.

15. Ein Offshore-Windturbinen-Installationsverfahren unter Verwendung eines Offshore-Windturbinen-Installationsschiffs (1) gemäß Anspruch 9, auf das eine Vielzahl von Windturbinen (3), von denen jede durch Verbinden eines Turms (5), einer Gondel (7) und von Windturbinenschaufeln (9) vormontiert ist, geladen und in der Vorne-Hinten-Richtung (A) des Schiffskörpers angeordnet sind bzw. werden, und das zu einem Windturbinen-Installations-Seegebiet, wo das Schiff (1) jede Windturbine (3) auf einem vorinstallierten Fundament (30) installiert, selbst fährt oder geschleppt wird,
wobei, wenn die Windturbine (3) auf dem Fundament (30) installiert wird, der Portalkran (70) die Windturbine (3) in einem Zustand trägt, wo sich ein horizontal erstreckender Tragbalken (74) und der Turm (5) der Windturbine (3) kreuzend zueinander erstrecken, und er sich zu einer Position über dem Fundament (30), welches sich hinter dem Schiffskörper befindet, bewegt, während die Windturbine (3) an einem unteren Ende davon hochgehoben wird, um die Windturbine (3) auf dem Fundament (30) zu installieren.

16. Ein Offshore-Windturbinen-Installationsverfahren unter Verwendung eines Offshore-Windturbinen-Installationsschiffs (1) gemäß Anspruch 11, auf das eine Vielzahl von Windturbinen (3), von denen jede durch Verbinden eines Turms (5), einer Gondel (7) und von Windturbinenschaufeln (9) vormontiert ist, geladen und in der Vorne-Hinten-Richtung (A) des Schiffskörpers angeordnet sind bzw. werden, und das zu einem Windturbinen-Installations-Seegebiet, wo das Schiff (1) jede Windturbine (3) auf einem vorinstallierten Fundament (30) installiert, selbst fährt oder geschleppt wird,
wobei die Verbindungsbrücke (57) das Fundament (30), welches sich hinter dem Schiffskörper befindet, und das Deck auf dem Schiffskörper verbindet, und
wobei die Schiebevorrichtung (53) einen unteren Teil der Windturbine (3), die auf das Deck geladen ist, zu dem Fundament (30) schiebt, und
wobei die Windturbine (3) durch die Schiebevorrichtung (53) so nach außen gedrückt wird, dass sie auf das Fundament (30) bewegt wird, während sie auf der Verbindungsbrücke (57) gleitet.

## Revendications

1. Navire (1) d'installation d'éoliennes en mer, sur lequel une pluralité d'éoliennes (3), chacune d'elles étant préassemblée en combinant une tour (5), une nacelle (7) et des pales d'éolienne, peut être chargée et disposée dans une direction (A) avant-arrière d'une coque et qui est autopropulsé ou remorqué jusqu'à une zone maritime d'installation d'éoliennes où le navire doit installer chaque éolienne (3) sur une fondation (30) installée à l'avance, le navire (1) comprenant :
un dispositif (16; 29; 42; 70) de manutention, qui est agencé pour se déplacer dans la direction (A) avant-arrière de la coque et pour prendre et lever la tour (5) de l'éolienne (3),
**caractérisé en ce que**
lors de l'installation de l'éolienne (3) sur la fondation (30), le dispositif (16; 29; 42; 70) de manutention est agencé pour prendre et lever la tour (5) de l'éolienne (3) et la déplacer sur un rail (14; 33; 33; 72) jusqu'à une position au-dessus de la fondation (30) se trouvant derrière la coque, de manière à installer l'éolienne (3) sur la fondation (30),
le navire étant pourvu d'une section (15; 38; 44) de prolongement du rail allant du rail (14; 33; 33; 72) à la position au-dessus de la fondation (30) se trouvant derrière la coque et
dans lequel la section (15; 38; 44) de prolongement du rail est rétractable vers la coque.

2. Navire (1) d'installation d'éoliennes en mer suivant la revendication 1, comprenant, en outre, une structure (12) de support d'éolienne, qui est dressée sur un pont et s'étend dans la direction (A) avant-arrière de la coque, la structure de support d'éolienne étant agencée pour supporter les éoliennes (3) chargées sur le pont,
dans lequel le rail (14) est prévu à une position en hauteur déterminée à l'avance de la structure (12) de support d'éolienne.

3. Navire (1) d'installation d'éoliennes en mer suivant la revendication 2, dans lequel la structure (12) de support d'éolienne est pourvue de la section (15) de prolongement du rail s'étendant du rail (14) à la position au-dessus de la fondation (30) se trouvant derrière la coque.

4. Navire (1) d'installation d'éoliennes en mer suivant la revendication 1, comprenant, en outre :
une structure (12) de support d'éolienne, qui est dressée sur un pont et s'étend dans la direction (A) avant-arrière de la coque, la structure (12) de support d'éolienne étant agencée pour supporter des éoliennes (3) chargées sur le pont et
un dispositif (31) de support agencé pour supporter la tour (5) de l'éolienne (3), alors qu'elle se meut sur un rail (14) de structure, qui est prévu à une position en hauteur déterminée à l'avance de la structure (12) de support d'éolienne et qui s'étend dans la direction (A) avant-arrière de la coque,
dans lequel le dispositif (29) de manutention est agencé pour se déplacer sur le rail (33) prévu sur le pont et
dans lequel, lorsque l'éolienne (3) est transportée, le dispositif (29) de manutention est agencé pour lever la tour (5) par une partie inférieure de celle-ci et le dispositif (12) de support est agencé pour supporter la tour (5) à une position en hauteur déterminée à l'avance de celle-ci.

5. Navire (1) d'installation d'éoliennes en mer suivant la revendication 4, dans lequel la structure (12) de support d'éolienne est pourvue d'une section (15) de prolongement du rail de structure s'étendant du rail (14) de structure à la position au-dessus de la fondation (30) se trouvant derrière la coque,
dans lequel le pont comprend une section (37) du prolongement du pont, qui s'étend jusqu'à la position au-dessus de la fondation (30) se trouvant derrière la coque,
dans lequel la section (37) de prolongement du pont est pourvue d'une section (38) de prolongement du rail de pont s'étendant du rail (33) prévu sur le pont vers une poupe et
dans lequel la section (15) de prolongement du rail de structure et la section (37) de prolongement du pont sont rétractables vers la coque.

6. Navire (1) d'installation d'éoliennes en mer suivant l'une quelconque des revendications 4 à 6, dans lequel le dispositif (12) de support est agencé pour se déplacer en suivant la position du dispositif (16) de manutention.

7. Navire (1) d'installation d'éoliennes en mer suivant l'une quelconque des revendications 1 à 6, dans lequel le dispositif (16; 29) de manutention est mobile dans une direction (B) de travers s'étendant orthogonalement à la direction (A) avant-arrière de la coque.

8. Navire (1) d'installation d'éoliennes en mer suivant la revendication 1, dans lequel
le rail (33) est prévu sur un pont et s'étend dans la direction (A) avant-arrière de la coque;
il est prévu un chariot (42), qui est agencé pour se déplacer sur le rail (33) dans un état où l'éolienne (3) est placée sur le chariot (42);
la section (44) de prolongement du rail, qui s'étend vers la position au-dessus de la fondation (30) se trouvant derrière la coque, peut être reliée au rail (33);
il est prévu un moyen (46) de déplacement dans la direction de travers, qui rend la section (44) de prolongement du rail mobile dans une direction (B) de travers s'étendant orthogonalement à la direction (A) avant-arrière de la coque et
il est prévu un moyen de déplacement dans la direction verticale, qui est agencé pour se déplacer dans la direction verticale de manière à déplacer la section (44) de prolongement du rail et le moyen (46) de déplacement dans la direction de travers en direction de la fondation (30) dans l'état où l'éolienne (3) est placée sur le chariot (42) et pour installer l'éolienne (3) sur la fondation (30);
le moyen (46) de déplacement dans la direction de travers et le moyen de déplacement dans la direction verticale étant rétractables vers la coque.

9. Navire (1) d'installation d'éoliennes en mer suivant la revendication 1, comprenant :
une grue (70) à portique agencée pour se déplacer dans la direction (A) avant-arrière de la coque sur le rail (72) prévue sur un pont du navire (1) et pour soulever l'éolienne (3),
dans lequel, lorsque l'éolienne (3) est montée sur la fondation (30), la grue (70) à portique est agencée pour supporter l'éolienne (3) dans un état où une poutre (74) s'étendant horizontalement et la tour (5) de l'éolienne (3) se croisent l'une l'autre et pour se déplacer vers la position au-dessus de la fondation (30) se trouvant derrière la coque, tout en soulevant l'éolienne (3) par son extrémité inférieure, de manière à installer l'éolienne (3) sur la fondation (30).

10. Navire (1) d'installation d'éoliennes en mer suivant la revendication 9, comprenant, en outre, une section (37) de prolongement du pont, qui s'étend vers la position au-dessus de la fondation (30) se trouvant derrière la coque,
dans lequel la grue (70) à portique est agencée pour se déplacer sur la section (37) de prolongement du pont et est guidée jusqu'à la position au-dessus de la fondation (30) et
dans lequel la section (37) de prolongement du pont est rétractable vers la coque.

11. Navire (1) d'installation d'éoliennes en mer, sur lequel une pluralité d'éoliennes (3), chacune d'elles étant préassemblée en combinant une tour (5), une nacelle (7) et des pales d'éolienne, peut être chargée et disposée dans une direction (A) avant-arrière d'une coque et qui est autopropulsé ou remorqué jusqu'à une zone maritime d'installation d'éoliennes où le navire doit installer chaque éolienne (3) sur une fondation (30) installée à l'avance, **caractérisé en ce que** le navire (1) comprend :
une passerelle (57) de liaison agencée pour relier la fondation (30) se trouvant derrière la coque et un pont sur la coque et
un dispositif (53) de poussée agencé pour pousser une partie inférieure de l'éolienne (3) chargée sur le pont vers la fondation (30), de manière à ce que l'éolienne (3) soit poussée vers l'extérieur par le dispositif (53) de poussée, de façon à être transportée sur la fondation (30) en glissant sur la passerelle (57) de liaison.

12. Navire (1) d'installation d'éoliennes en mer suivant la revendication 11, dans lequel une extrémité inférieure de la tour (5) de l'éolienne (3) est pourvue d'une section (62) de coopération ayant une forme qui peut coopérer avec un chambrage (60) formé dans la fondation (30).

13. Procédé d'installation d'une éolienne en mer en utilisant un navire (1) d'installation d'éoliennes en mer suivant la revendication 1, sur lequel une pluralité d'éoliennes (3), chacune d'elles étant préassemblée en combinant une tour (5), une nacelle (7) et des pales d'éolienne, peut être chargée et disposée dans une direction (A) avant-arrière d'une coque et qui est autopropulsé ou remorqué jusqu'à une zone maritime d'installation d'éoliennes où le navire (1) installe chaque éolienne (3) sur une fondation (30) installée à l'avance,
dans lequel, lorsqu'on installe l'éolienne (3) sur la fondation, le dispositif (16; 29; 42; 70) de manutention prend et soulève la tour (5) de l'éolienne (3) et se déplace sur le rail (14; 33; 33; 72) et sur la section (15; 38; 44) de prolongement du rail jusqu'à une position au-dessus de la fondation (30) se trouvant derrière la coque, de manière à installer l'éolienne (3) sur la fondation (30).

14. Procédé d'installation d'une éolienne en mer utilisant un navire (1) d'installation d'éoliennes en mer suivant la revendication 8, sur lequel une pluralité d'éoliennes (3), chacune d'elles étant préassemblée en combinant une tour (5), une nacelle (7) et des pales d'éolienne, peut être chargée et disposée dans une direction (A) avant-arrière d'une coque et qui est autopropulsé ou remorqué jusqu'à une zone maritime d'installation d'éoliennes où le navire (1) installe chaque éolienne (3) sur une fondation installée à l'avance,
dans lequel le chariot (42) se déplace sur le rail (33) dans un état où l'éolienne (3) est placée sur le chariot (42);
la section (44) de prolongement du rail, qui s'étend jusqu'à une position au-dessus de la fondation (30) se trouvant derrière la coque, est reliée au rail (33) et
le moyen de déplacement dans la direction verticale se déplace dans la direction verticale de manière à déplacer la section (44) de prolongement du rail et le moyen (46) de déplacement dans la direction de travers se déplace vers la fondation (30) dans l'état où l'éolienne (3) est placée sur le chariot (42) pour installer l'éolienne (3) sur la fondation (30).

15. Procédé d'installation d'une éolienne en mer utilisant un navire (1) d'installation d'éoliennes en mer suivant la revendication 9, sur lequel une pluralité d'éoliennes (3), chacune d'elles étant préassemblée en combinant une tour (5), une nacelle (7) et des pales d'éolienne, peut être chargée et disposée dans une direction (A) avant-arrière d'une coque et qui est autopropulsé ou remorqué jusqu'à une zone maritime d'installation d'éoliennes où le navire (1) installe chaque éolienne (3) sur une fondation (30) installée à l'avance,
dans lequel, lorsqu'on installe l'éolienne (3) sur la fondation (30), la grue (70) à portique supporte l'éolienne (3) dans un état où une poutre (74) s'étendant horizontalement et la tour (5) de l'éolienne (3) se croisent et se déplacent jusqu'à une position au-dessus de la fondation (30) se trouvant derrière la coque tout en soulevant l'éolienne (3) par son extrémité inférieure, de manière à installer l'éolienne (3) sur la fondation (30).

16. Procédé d'installation d'une éolienne en mer utilisant un navire (1) d'installation d'éoliennes en mer suivant la revendication 11, sur lequel une pluralité d'éoliennes (3), chacune d'elles étant préassemblée en combinant une tour (5), une nacelle (7) et des pales d'éolienne, peut être chargée et disposée dans une direction (A) avant-arrière d'une coque et qui est autopropulsé ou remorqué jusqu'à une zone maritime d'installation d'éoliennes où le navire (1) installe chaque éolienne (3) sur une fondation (30) installée à l'avance,
dans lequel la passerelle (57) de liaison relie la fondation (30) se trouvant derrière la coque et le pont sur la coque et
dans lequel le dispositif (53) de poussée pousse une partie inférieure de l'éolienne (3) chargée sur le pont en direction de la fondation et
dans lequel l'éolienne (3) est poussée vers l'extérieur par le dispositif (53) de poussée, de manière à être transportée sur la fondation (30) tout en glissant sur la passerelle (57) de liaison.
